# EUROPEAN PATENT APPLICATION

(11) **EP 4 804 613 A1**
(43) Date of publication of application: **09.09.2026**
(21) Application number: 23957375.1
(22) Date of filing: 03.11.2023
(51) Int. Cl.: H04W 36/00

(54) **MEASUREMENT METHOD, DEVICE AND STORAGE MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Stöckeler, Ferdinand
(86) International application number: PCT/CN2023/129797
(87) International publication number: WO 2025/091519

(57) **Abstract**

Embodiments of the present disclosure relate to a measurement method, a device and a storage medium. The method comprises: determining a first measurement period on the basis of a first parameter, and performing signal measurement on a neighbor cell on the basis of the first measurement period, wherein the first measurement period is a period during which a terminal device measures the neighbor cell when a first condition is met, the first condition is used for determining that the terminal device can perform signal measurement on the neighbor cell and a serving cell respectively on the basis of different fast Fourier transform (FFT) processors, and the first parameter is a measurement period scaling factor corresponding to the neighbor cell. Therefore, the measurement period of a neighbor cell can be determined, and performing signal measurement on a neighbor cell and a serving cell respectively on the basis of different FFT processors improves the timeliness of signal measurement.

## Description

### TECHNICAL FIELD

The disclosure relates to the field of communication technology, and specifically to a measurement method, a device and a storage medium.

### BACKGROUND

In wireless communication systems, to reduce handover delay and signaling overhead, the 3rd Generation Partnership Project (3GPP) has introduced layer 1 (L1)/layer 2 (L2)-triggered mobility (LTM). Based on LTM, a network device may configure a terminal with a plurality of candidate cells (or candidate cell group), and the network device may control the terminal to perform handover or change a serving cell among the plurality of candidate cells (or candidate cell group) by means of L1 signaling or L2 signaling.

### SUMMARY

Embodiments of the disclosure provide a measurement method, a device and a storage medium.

According to a first aspect of the embodiments of the disclosure, a measurement method is provided, including:
determining a first measurement period according to a first parameter, in which the first measurement period is a period for a terminal to perform a measurement on a neighbor cell in a case where a first condition is satisfied, the first condition is configured to determine that the terminal is capable of performing a signal measurement on the neighbor cell and a serving cell respectively based on different fast Fourier transform (FFT) processors, and the first parameter is a measurement period scaling factor corresponding to the neighbor cell; and
performing the signal measurement on the neighbor cell according to the first measurement period.

According to a second aspect of the embodiments of the disclosure, a measurement method is provided, including:
determining a first measurement period according to a first parameter, in which the first measurement period is a period for a terminal to perform a measurement on a neighbor cell in a case where a first condition is satisfied, the first condition is configured to determine that the terminal is capable of performing a signal measurement on the neighbor cell and a serving cell respectively based on different FFT processors, and the first parameter is a measurement period scaling factor corresponding to the neighbor cell; and
determining, according to the first measurement period, an expected time for the terminal to perform the signal measurement.

According to a third aspect of the embodiments of the disclosure, a terminal is provided, including:
a processing module, configured to determine a first measurement period according to a first parameter, in which the first measurement period is a period for a terminal to perform a measurement on a neighbor cell in a case where a first condition is satisfied, the first condition is configured to determine that the terminal is capable of performing a signal measurement on the neighbor cell and a serving cell respectively based on different FFT processors, and the first parameter is a measurement period scaling factor corresponding to the neighbor cell; and perform the signal measurement on the neighbor cell according to the first measurement period.

According to a fourth aspect of the embodiments of the disclosure, a network device is provided, including:
a processing module, configured to determine a first measurement period according to a first parameter, in which the first measurement period is a period for a terminal to perform a measurement on a neighbor cell in a case where a first condition is satisfied, the first condition is configured to determine that the terminal is capable of performing a signal measurement on the neighbor cell and a serving cell respectively based on different FFT processors, and the first parameter is a measurement period scaling factor corresponding to the neighbor cell; and determine, according to the first measurement period, an expected time for the terminal to perform the signal measurement.

According to a fifth aspect of the embodiments of the disclosure, a communication device is provided, including: one or more processors, in which the one or more processors are configured to execute the optional implementations of the first aspect or second aspect.

According to a sixth aspect of the embodiments of the disclosure, a storage medium is provided, in which instructions are stored in the storage medium, and when the instructions run on a communication device, the communication device is caused to perform the method as descripted in the optional implementations of the first aspect or second aspect.

According to a seventh aspect of the embodiments of the disclosure, a communication system is provided, which may include: a terminal and a network device; in which the terminal is configured to perform the method as described in the optional implementations of the first aspect, and the network device is configured to perform the method as described in the optional implementations of the second aspect.

The technical solutions provided by the embodiments of the disclosure may include the following beneficial effects: the first measurement period is determined according to the first parameter, and the signal measurement is performed on the neighbor cell according to the first measurement period, in which the first measurement period is a period for the terminal to perform the measurement on the neighbor cell in a case where the first condition is satisfied, the first condition is configured to determine that the terminal is capable of performing the signal measurement on the neighbor cell and the serving cell respectively based on different FFT processors, and the first parameter is the measurement period scaling factor corresponding to the neighbor cell. In this way, the measurement period for the neighbor cell may be determined, and the signal measurement may be performed on the neighbor cell and the serving cell respectively based on different FFT processors, thereby improving a timeliness of the signal measurement.

It is to be understood that both the foregoing general description and the following detailed description are exemplary and explanatory only and are not restrictive of the disclosure.

### BRIEF DESCRIPTION OF THE DRAWINGS

For a clearer description of the technical solutions in the embodiments of the disclosure, the accompanying drawings required for describing the embodiments are introduced below. The following drawings merely illustrate some embodiments of the disclosure and do not constitute a specific limitation on the protection scope of the disclosure.
FIG. 1 is a schematic architectural diagram of a communication system according to an embodiment of the disclosure.
FIG. 2A is an interactive schematic diagram of a measurement method according to an embodiment of the disclosure.
FIG. 2B is an interactive schematic diagram of a measurement method according to an embodiment of the disclosure;
FIG. 3A is a schematic flowchart of a measurement method according to an embodiment of the disclosure.
FIG. 3B is a schematic flowchart of a measurement method according to an embodiment of the disclosure.
FIG. 3C is a schematic flowchart of a measurement method according to an embodiment of the disclosure.
FIG. 4A is a schematic flowchart of a measurement method according to an embodiment of the disclosure.
FIG. 4B is a schematic flowchart of a measurement method according to an embodiment of the disclosure.
FIG. 4C is a schematic flowchart of a measurement method according to an embodiment of the disclosure.
FIG. 5 is a schematic flowchart of a measurement method according to an embodiment of the disclosure.
FIG. 6A is a schematic structural diagram of a terminal according to an embodiment of the disclosure.
FIG. 6B is a schematic structural diagram of a network device according to an embodiment of the disclosure.
FIG. 7A is a schematic structural diagram of a communication device according to an embodiment of the disclosure.
FIG. 7B is a schematic structural diagram of a chip according to an embodiment of the disclosure.

### DETAILED DESCRIPTION

Embodiments of the disclosure provide a measurement method, a device and a storage medium.

According to a first aspect of the embodiments of the disclosure, a measurement method is provided, including:
determining a first measurement period according to a first parameter, in which the first measurement period is a period for a terminal to perform a measurement on a neighbor cell in a case where a first condition is satisfied, the first condition is configured to determine that the terminal is capable of performing a signal measurement on the neighbor cell and a serving cell respectively based on different fast Fourier transform (FFT) processors, and the first parameter is a measurement period scaling factor corresponding to the neighbor cell; and
performing the signal measurement on the neighbor cell according to the first measurement period.

In the above embodiments, the measurement period for the neighbor cell may be determined, and the signal measurement may be performed on the neighbor cell and the serving cell respectively based on different FFT processors, thereby improving a timeliness of the signal measurement.

In conjunction with some embodiments of the first aspect, in some embodiments, the first condition includes at least one of the following:
that the terminal supports a first capability, in which the first capability is a capability that the terminal supports that a receiving time difference (RTD) of a plurality of target cells is greater than a cyclic prefix (CP), and the plurality of target cells comprise the neighbor cell and/or the serving cell of the terminal;
that the terminal is provided with a first processor, in which the first processor is an FFT processor capable of measuring the neighbor cell; or
that a time difference of signals received by the terminal from a plurality of target cells can be greater than the CP.

In the above embodiments, the signal measurement may be performed, according to capabilities of the terminal, on the neighbor cell and the serving cell respectively based on different FFT processors, thereby improving the timeliness of the signal measurement.

In conjunction with some embodiments of the first aspect, in some embodiments, the method further includes:
determining the first parameter according to first information, in which the first information is information related to the neighbor cell of the terminal.

In conjunction with some embodiments of the first aspect, in some embodiments, the first information includes at least one of:
transmission configuration indicator (TCI) information, in which the TCI information is configured to determine whether any neighbor cell is present on an active TCI state list;
a first number, in which the first number is a number of neighbor cells;
a second number, in which the second number is a number of first-type neighbor cells, and a first-type neighbor cell is a neighbor cell present on the active TCI state list;
a third number, in which the third number is a number of second-type neighbor cells, a second-type neighbor cell is a neighbor cell not present on the active TCI state list, and a sum of the third number and the second number is less than or equal to the first number;
a fourth number, in which the fourth number is a number of first processors, and a first processor is an FFT processor capable of measuring the neighbor cell;
a fifth number, in which the fifth number is a number of first processors allocated for use by the first-type neighbor cell; or
a sixth number, in which the sixth number is a number of first processors allocated for use by the second-type neighbor cell, and a sum of the fifth number and the sixth number is less than or equal to the fourth number.

In the above embodiments, the first parameter may be determined according to one or more items of the above first information, and a corresponding measurement period may be determined according to the first parameter, so as to improve measurement reliability.

In conjunction with some embodiments of the first aspect, in some embodiments, determining the first parameter according to the first information includes:
determining that the first number is less than or equal to the fourth number; and
determining the first parameter as P11, in which the P11 is a preset positive integer.

In the above embodiments, the first measurement period is determined according to the first parameter, and the neighbor cell is measured based on the first measurement period by using the first processor, which may improve the timeliness of the signal measurement.

In conjunction with some embodiments of the first aspect, in some embodiments, determining the first parameter according to the first information includes:
determining that the first number is greater than the fourth number; and
determining the first parameter according to the TCI information, the fourth number and third information, in which the third information includes at least one of: the first number, the second number, the third number, the fifth number, or the sixth number.

In conjunction with some embodiments of the first aspect, in some embodiments, determining the first parameter according to the TCI information, the fourth number and the third information includes:
determining, according to the TCI information, that one or more neighbor cells of the terminal are present on the active TCI state list;
allocating one or more first processors for use by one or more first-type neighbor cells; and
determining, according to the second number and the fourth number, the first parameter corresponding to the first-type neighbor cell.

In the above embodiments, the first processor may be preferentially allocated to the first-type neighbor cell, so as to improve the measurement efficiency of the first-type neighbor cell.

In conjunction with some embodiments of the first aspect, in some embodiments, determining, according to the second number and the fourth number, the first parameter corresponding to the first-type neighbor cell includes any one of:
determining the first parameter corresponding to the first-type neighbor cell as P21, in which the P21 is a value obtained by rounding up a quotient of the second number divided by the fourth number;
in a case where the fourth number is equal to N1, determining the first parameter as the second number, in which the N1 is a preset positive integer;
in a case where the fourth number is greater than or equal to the N1, and the second number is greater than or equal to the fourth number, determining the first parameter as the P21;
in a case where the second number is less than or equal to the fourth number, determining the first parameter as P22, in which the P22 is a preset positive integer.

In the above embodiments, the first processor may be preferentially allocated to the first-type neighbor cell, so as to improve the measurement efficiency of the first-type neighbor cell.

In conjunction with some embodiments of the first aspect, in some embodiments, determining the first parameter according to the TCI information, the fourth number and the third information includes:
in a case where the fourth number is equal to N1, and it is determined according to the TCI information that one or more neighbor cells of the terminal are present on the active TCI state list, performing the signal measurement on one or more first-type neighbor cells and one or more second-type neighbor cells by using the fourth number of first processors;
determining the first parameter corresponding to the first-type neighbor cell as a product of the second number and a first value, in which the first value is a positive integer greater than or equal to 2; and
determining the first parameter corresponding to the second-type neighbor cell as a product of the third number and the first value.

In the foregoing embodiments, the first-type neighbor cell and the second-type neighbor cell share the first processor equally and may both be measured. Meanwhile, when the number of the first-type neighbor cells is less than the number of the second-type neighbor cells, a measurement priority of the first-type neighbor cell may be improved.

In conjunction with some embodiments of the first aspect, in some embodiments, determining the first parameter according to the TCI information, the fourth number and the third information includes:
in a case where the fourth number is greater than N1, and it is determined according to the TCI information that one or more neighbor cells of the terminal are present on the active TCI state list, allocating the fifth number of first processors for use by one or more first-type neighbor cells, and allocating the sixth number of first processors for use by one or more second-type neighbor cells;
determining the first parameter corresponding to the first-type neighbor cell according to the second number and the fifth number, in which the fifth number is less than or equal to the second number; and
determining the first parameter corresponding to the second-type neighbor cell according to the third number and the sixth number, in which the sixth number is less than or equal to the third number.

In the foregoing embodiments, a plurality of first processors may be respectively allocated to the first-type neighbor cell(s) and the second-type neighbor cell(s) for the signal measurement, which improves the reliability of the signal measurement.

In conjunction with some embodiments of the first aspect, in some embodiments, determining the first parameter corresponding to the first-type neighbor cell according to the second number and the fifth number includes any one of:
determining the first parameter corresponding to the first-type neighbor cell as P32, in which the P32 is a value obtained by rounding up a quotient of the second number divided by the fifth number;
in a case where the fifth number is equal to N1, determining the first parameter corresponding to the first-type neighbor cell as the second number;
in a case where the fifth number is equal to the second number, determining the first parameter corresponding to the first-type neighbor cell as P31, in which the P31 is a positive integer;
in a case where the fifth number is greater than the N1 and less than the second number, determining the first parameter corresponding to the first-type neighbor cell as the P32.

In conjunction with some embodiments of the first aspect, in some embodiments, determining the first parameter corresponding to the second-type neighbor cell according to the third number and the sixth number includes any one of:
determining the first parameter corresponding to the second-type neighbor cell as P42, in which the P42 is a value obtained by rounding up a quotient of the third number divided by the sixth number;
in a case where the sixth number is equal to N1, determining the first parameter corresponding to the second-type neighbor cell as the third number;
in a case where the sixth number is equal to the third number, determining the first parameter corresponding to the second-type neighbor cell as P41, in which the P41 is a positive integer;
in a case where the sixth number is greater than the N1 and less than the third number, determining the first parameter corresponding to the second-type neighbor cell as the P42.

In conjunction with some embodiments of the first aspect, in some embodiments, determining the first parameter according to the TCI information, the fourth number and the third information includes:
determining, according to the TCI information, that no neighbor cell of the terminal is present on the active TCI state list;
allocating one or more first processors for use by one or more second-type neighbor cells; and
determining, according to the third number and the fourth number, the first parameter corresponding to the second-type neighbor cell.

In the above embodiments, the first processor(s) may be allocated to the second-type neighbor cell(s) for the signal measurement in the absence of first-type neighbor cells.

In conjunction with some embodiments of the first aspect, in some embodiments, determining, according to the third number and the fourth number, the first parameter corresponding to the second-type neighbor cell includes any one of:
determining the first parameter corresponding to the second-type neighbor cell as P51, in which the P51 is a value obtained by rounding up a quotient of the third number divided by the fourth number;
in a case where the fourth number is equal to N1, determining the first parameter as the third number;
in a case where the fourth number is greater than or equal to the N1, determining the first parameter as the P51;
in a case where the fourth number is greater than or equal to the N1, determining the first parameter as P52, in which the P52 is a number of frequency layers expected to be measured by the terminal.

In conjunction with some embodiments of the first aspect, in some embodiments, determining the first parameter according to the first information includes any one of:
determining the first parameter as P61, in which the P61 is a value obtained by rounding up a quotient of the first number divided by the fourth number;
in a case where the first number is greater than the fourth number, and the fourth number is equal to N1, determining the first parameter as the first number;
in a case where the first number is greater than the fourth number, and the fourth number is greater than or equal to the N1, determining the first parameter as the P61;
in a case where the first number is greater than the fourth number, and the fourth number is greater than or equal to the N1, determining the first parameter as P62, in which the P62 is a number of frequency layers expected to be measured by the terminal.

In the above embodiments, it is unnecessary to distinguish types of neighbor cells, and all neighbor cells share the first processor(s) for the signal measurement, which improves a fairness of neighbor cell signal measurement.

**In** conjunction with some embodiments of the first aspect, in some embodiments, determining the first measurement period according to the first parameter includes:
determining the first measurement period according to the first parameter and second information,
in which the second information includes at least one of:
   whether the terminal is configured with discontinuous reception (DRX);
   a DRX cycle of the terminal;
   a measurement report period of the terminal;
   a period T_{SSB_NBC} of a synchronization signal block (SSB) index of the neighbor cell of the terminal;
   a third parameter M, in which the third parameter M is a parameter determined according to an upper layer configuration;
   a fourth parameter P, in which the fourth parameter P is a parameter determined according to a measurement gap (GAP) configured for the terminal and a slot occasion of an SSB; or
   a fifth parameter K, in which the fifth parameter K is a preset parameter.

In the above embodiments, the first measurement period is determined according to the first parameter and the second information, improving an accuracy of the measurement period.

In conjunction with some embodiments of the first aspect, in some embodiments, the neighbor cell is a neighbor cell expected to be measured by the terminal, and one or more neighbor cells expected to be measured are a subset or a full set of one or more neighbor cells configured by a network device for the terminal.

**In** conjunction with some embodiments of the first aspect, in some embodiments, the signal measurement is a measurement for a layer 1 (L1) or layer 2 (L2) triggered mobility (LTM).

According to a second aspect of the embodiments of the disclosure, a measurement method is provided, including:
determining a first measurement period according to a first parameter, in which the first measurement period is a period for a terminal to perform a measurement on a neighbor cell in a case where a first condition is satisfied, the first condition is configured to determine that the terminal is capable of performing a signal measurement on the neighbor cell and a serving cell respectively based on different FFT processors, and the first parameter is a measurement period scaling factor corresponding to the neighbor cell; and
determining, according to the first measurement period, an expected time for the terminal to perform the signal measurement.

In the above embodiments, the measurement period for the neighbor cell may be determined, and the signal measurement may be performed on the neighbor cell and the serving cell respectively based on different FFT processors, thereby improving a timeliness of the signal measurement.

In conjunction with some embodiments of the second aspect, in some embodiments, the first condition includes at least one of:
that the terminal supports a first capability, in which the first capability is a capability that the terminal supports that an RTD of a plurality of target cells is greater than a CP, and the plurality of target cells comprise the neighbor cell and/or the serving cell of the terminal;
that the terminal is provided with a first processor, in which the first processor is an FFT processor capable of measuring the neighbor cell; or
that a time difference of signals received by the terminal from a plurality of target cells can be greater than the CP.

In conjunction with some embodiments of the second aspect, in some embodiments, the method further includes:
determining the first parameter according to first information, in which the first information is information related to the neighbor cell of the terminal.

In conjunction with some embodiments of the second aspect, in some embodiments, the first information includes at least one of:
TCI information, in which the TCI information is configured to determine whether any neighbor cell is present on an active TCI state list;
a first number, in which the first number is a number of neighbor cells;
a second number, in which the second number is a number of first-type neighbor cells, and a first-type neighbor cell is a neighbor cell present on the active TCI state list;
a third number, in which the third number is a number of second-type neighbor cells, a second-type neighbor cell is a neighbor cell not present on the active TCI state list, and a sum of the third number and the second number is less than or equal to the first number;
a fourth number, in which the fourth number is a number of first processors, and a first processor is an FFT processor capable of measuring the neighbor cell;
a fifth number, in which the fifth number is a number of first processors allocated for use by the first-type neighbor cell; or
a sixth number, in which the sixth number is a number of first processors allocated for use by the second-type neighbor cell, and a sum of the fifth number and the sixth number is less than or equal to the fourth number.

In conjunction with some embodiments of the second aspect, in some embodiments, determining the first parameter according to the first information includes:
determining that the first number is less than or equal to the fourth number; and
determining the first parameter as P11, in which the P11 is a preset positive integer.

In conjunction with some embodiments of the second aspect, in some embodiments, determining the first parameter according to the first information includes:
determining that the first number is greater than the fourth number; and
determining the first parameter according to the TCI information, the fourth number and third information, in which the third information includes at least one of: the first number, the second number, the third number, the fifth number, or the sixth number.

In conjunction with some embodiments of the second aspect, in some embodiments, determining the first parameter according to the TCI information, the fourth number and the third information includes:
determining, according to the TCI information, that one or more neighbor cells of the terminal are present on the active TCI state list;
allocating one or more first processors for use by one or more first-type neighbor cells; and
determining, according to the second number and the fourth number, the first parameter corresponding to the first-type neighbor cell.

In conjunction with some embodiments of the second aspect, in some embodiments, determining, according to the second number and the fourth number, the first parameter corresponding to the first-type neighbor cell includes any one of:
determining the first parameter corresponding to the first-type neighbor cell as P21, in which the P21 is a value obtained by rounding up a quotient of the second number divided by the fourth number;
in a case where the fourth number is equal to N1, determining the first parameter as the second number, in which the N1 is a preset positive integer;
in a case where the fourth number is greater than or equal to the N1, and the second number is greater than or equal to the fourth number, determining the first parameter as the P21;
in a case where the second number is less than or equal to the fourth number, determining the first parameter as P22, in which the P22 is a preset positive integer.

In conjunction with some embodiments of the second aspect, in some embodiments, determining the first parameter according to the TCI information, the fourth number and the third information includes:
in a case where the fourth number is equal to N1, and it is determined according to the TCI information that one or more neighbor cells of the terminal are present on the active TCI state list, performing the signal measurement on one or more first-type neighbor cells and one or more second-type neighbor cells by using the fourth number of first processors;
determining the first parameter corresponding to the first-type neighbor cell as a product of the second number and a first value, in which the first value is a positive integer greater than or equal to 2; and
determining the first parameter corresponding to the second-type neighbor cell as a product of the third number and the first value.

In conjunction with some embodiments of the second aspect, in some embodiments, determining the first parameter according to the TCI information, the fourth number and the third information includes:
in a case where the fourth number is greater than N1, and it is determined according to the TCI information that one or more neighbor cells of the terminal are present on the active TCI state list, allocating the fifth number of first processors for use by one or more first-type neighbor cells, and allocating the sixth number of first processors for use by one or more second-type neighbor cells;
determining the first parameter corresponding to the first-type neighbor cell according to the second number and the fifth number, in which the fifth number is less than or equal to the second number; and
determining the first parameter corresponding to the second-type neighbor cell according to the third number and the sixth number, in which the sixth number is less than or equal to the third number.

In conjunction with some embodiments of the second aspect, in some embodiments, determining the first parameter corresponding to the first-type neighbor cell according to the second number and the fifth number includes any one of:
determining the first parameter corresponding to the first-type neighbor cell as P32, in which the P32 is a value obtained by rounding up a quotient of the second number divided by the fifth number;
in a case where the fifth number is equal to N1, determining the first parameter corresponding to the first-type neighbor cell as the second number;
in a case where the fifth number is equal to the second number, determining the first parameter corresponding to the first-type neighbor cell as P31, in which the P31 is a positive integer;
in a case where the fifth number is greater than the N1 and less than the second number, determining the first parameter corresponding to the first-type neighbor cell as the P32.

In conjunction with some embodiments of the second aspect, in some embodiments, determining the first parameter corresponding to the second-type neighbor cell according to the third number and the sixth number includes any one of:
determining the first parameter corresponding to the second-type neighbor cell as P42, in which the P42 is a value obtained by rounding up a quotient of the third number divided by the sixth number;
in a case where the sixth number is equal to N1, determining the first parameter corresponding to the second-type neighbor cell as the third number;
in a case where the sixth number is equal to the third number, determining the first parameter corresponding to the second-type neighbor cell as P41, in which the P41 is a positive integer;
in a case where the sixth number is greater than the N1 and less than the third number, determining the first parameter corresponding to the second-type neighbor cell as the P42.

In conjunction with some embodiments of the second aspect, in some embodiments, determining the first parameter according to the TCI information, the fourth number and the third information includes:
determining, according to the TCI information, that no neighbor cell of the terminal is present on the active TCI state list;
allocating one or more first processors for use by one or more second-type neighbor cells; and
determining, according to the third number and the fourth number, the first parameter corresponding to the second-type neighbor cell.

In conjunction with some embodiments of the second aspect, in some embodiments, determining, according to the third number and the fourth number, the first parameter corresponding to the second-type neighbor cell includes any one of:
determining the first parameter corresponding to the second-type neighbor cell as P51, in which the P51 is a value obtained by rounding up a quotient of the third number divided by the fourth number;
in a case where the fourth number is equal to N1, determining the first parameter as the third number;
in a case where the fourth number is greater than or equal to the N1, determining the first parameter as the P51;
in a case where the fourth number is greater than or equal to the N1, determining the first parameter as P52, in which the P52 is a number of frequency layers expected to be measured by the terminal.

In conjunction with some embodiments of the second aspect, in some embodiments, determining the first parameter according to the first information includes any one of:
determining the first parameter as P61, in which the P61 is a value obtained by rounding up a quotient of the first number divided by the fourth number;
in a case where the first number is greater than the fourth number, and the fourth number is equal to N1, determining the first parameter as the first number;
in a case where the first number is greater than the fourth number, and the fourth number is greater than or equal to the N1, determining the first parameter as the P61;
in a case where the first number is greater than the fourth number, and the fourth number is greater than or equal to the N1, determining the first parameter as P62, in which the P62 is a number of frequency layers expected to be measured by the terminal.

In conjunction with some embodiments of the second aspect, in some embodiments, determining the first measurement period according to the first parameter includes:
determining the first measurement period according to the first parameter and second information,
in which the second information includes at least one of:
   whether the terminal is configured with DRX;
   a DRX cycle of the terminal;
   a measurement report period of the terminal;
   a period T_{SSB_NBC} of an SSB index of the neighbor cell of the terminal;
   a third parameter M, in which the third parameter M is a parameter determined according to an upper layer configuration;
   a fourth parameter P, in which the fourth parameter P is a parameter determined according to a GAP configured for the terminal and a slot occasion of an SSB; or
   a fifth parameter K, in which the fifth parameter K is a preset parameter.

In conjunction with some embodiments of the second aspect, in some embodiments, the neighbor cell is a neighbor cell expected to be measured by the terminal, and one or more neighbor cells expected to be measured are a subset or a full set of one or more neighbor cells configured by a network device for the terminal.

In conjunction with some embodiments of the second aspect, in some embodiments, the signal measurement is a measurement for an LTM.

According to a third aspect of the embodiments of the disclosure, a terminal is provided, which may include at least one of a transceiver module or a processing module, in which the terminal may be configured to perform the optional implementations of the first aspect.

According to a fourth aspect of the embodiments of the disclosure, a network device is provided, which may include at least one of a transceiver module or a processing module, in which the network device may be configured to perform the optional implementations of the second aspect.

According to a fifth aspect of the embodiments of the disclosure, a communication device is provided, which may include: one or more processors, in which the communication device may be configured to perform the optional implementations of the first aspect or the second aspect.

According to a sixth aspect of the embodiments of the disclosure, a storage medium is provided, which stores instructions that, when run on a communication device, cause the communication device to perform the method as described in the optional implementations of the first aspect or the second aspect.

According to a seventh aspect of the embodiments of the disclosure, a program product is provided, which, when executed by a communication device, causes the communication device to perform the method as described in the optional implementations of the first aspect or the second aspect.

According to an eighth aspect of the embodiments of the disclosure, a computer program is provided, which, when run on a computer, causes the computer to perform the method as described in the optional implementations of the first aspect or the second aspect.

According to a ninth aspect of the embodiments of the disclosure, a chip or a chip system is provided. The chip or chip system includes a processing circuit configured to perform the method as described in the optional implementations of the first aspect or the second aspect.

According to a tenth aspect of the embodiments of the disclosure, a communication system is provided, which may include: a terminal and a network device; in which the terminal is configured to perform the method as described in the optional implementations of the first aspect, and the network device is configured to perform the method as described in the optional implementations of the second aspect.

The foregoing terminal, network device, communication device, communication system, storage medium, program product, computer program, chip or chip system may all be configured to perform the method provided by the embodiments of the disclosure. Therefore, for the beneficial effects that can be achieved thereby, reference may be made to the beneficial effects in the corresponding method, which are not repeated here.

Embodiments of the disclosure provide a measurement method, a device, and a storage medium. In some embodiments, terms such as measurement method, information processing method, and communication method are interchangeable; terms such as measurement apparatus, information processing apparatus, communication apparatus, and communication device are interchangeable; and terms such as information processing system and communication system are interchangeable.

The embodiments of the disclosure are not exhaustive but merely illustrative of some embodiments, and shall not serve as specific limitations on the protection scope of the disclosure. Without conflict, each step in a certain embodiment may be implemented as an independent embodiment, and the steps may be combined arbitrarily. For example, the solution after removing some steps in a certain embodiment may also be implemented as an independent embodiment, and the order of the steps in a certain embodiment may be swapped arbitrarily. In addition, implementations in a certain embodiment may be combined arbitrarily; furthermore, the embodiments may be combined arbitrarily. For example, some or all steps of different embodiments may be combined arbitrarily, and a certain embodiment may be combined arbitrarily with implementations of other embodiments.

**In** the embodiments of the disclosure, unless otherwise specified and without logical conflict, the terms and/or descriptions between the embodiments are consistent and may be cross-referenced. Technical features in different embodiments may be combined to form new embodiments according to their inherent logical relationships.

The terms used in the embodiments of the disclosure are merely for the purpose of describing specific embodiments and are not intended to limit the disclosure.

In the embodiments of the disclosure, unless otherwise stated, elements expressed in the singular form, such as "a", "an", "the", "aforesaid", "said", "foregoing", "this", may denote "one and only one", or "one or more", "at least one", etc. For example, when articles such as "a", "an", and "the" in English are used in translation, the noun following the article may be understood as a singular form or a plural form.

In the embodiments of the disclosure, "a plurality of' refers to two or more.

In some embodiments, terms such as "at least one (of)", "one or more", "a plurality of", and "multiple" may be used interchangeably.

In some embodiments, recitations such as "at least one of A, B", "A and/or B", "A in one case and B in another case", "A in response to one case and B in response to another case" may include the following technical solutions as appropriate: in some embodiments, A (performing A independently of B); in some embodiments, B (performing B independently of A); in some embodiments, selectively performing from A and B (A and B are selectively performed); in some embodiments, both A and B (both A and B are performed). The same applies when there are more items such as A, B, C.

In some embodiments, a recitation such as "A or B" may include the following technical solutions as appropriate: in some embodiments, A (performing A independently of B); in some embodiments, B (performing B independently of A); in some embodiments, selectively performing from A and B (A and B are selectively performed). The same applies when there are more items such as A, B, C.

Prefixes such as "first" and "second" in the embodiments of the disclosure are merely used to distinguish different description objects and do not limit the position, order, priority, number, or content of the description objects. For the description of the description objects, refer to the description in the claims or the context of the embodiments, and unnecessary limitations shall not be constituted due to the use of the prefixes. For example, when the description object is a "field", the ordinal numbers before "field" in "the first field" and "the second field" do not limit the position or order between the "fields", and "first" and "second" do not limit whether the "fields" modified thereby are in the same message or the order between "the first field" and "the second field". For another example, when the description object is a "level", the ordinal numbers before "level" in "the first level" and "the second level" do not limit the priority between the "levels". For yet another example, the number of the description object is not limited by the ordinal number and may be one or more. Taking "the first apparatus" as an example, the number of the "apparatus" may be one or more. In addition, objects modified by different prefixes may be the same or different. For example, when the description object is an "apparatus", "the first apparatus" and "the second apparatus" may be the same or different apparatuses, and their types may be the same or different; for another example, when the description object is "information", "the first information" and "the second information" may be the same or different information, and their contents may be the same or different.

In some embodiments, expressions such as "including A", "containing A", "used to indicate A", and "carrying A" may be interpreted as directly carrying A or indirectly indicating A.

In some embodiments, the terms "in response to...", "in response to determining that...", "in the case that...", "when...", "at the time when...", "if...", and "in the event that..." may be used interchangeably.

In some embodiments, terms such as "greater than", "greater than or equal to", "not less than", "more than", "more than or equal to", "no less than", "higher than", "higher than or equal to", "not lower than", and "above" may be used interchangeably; terms such as "less than", "less than or equal to", "not greater than", "fewer than", "fewer than or equal to", "no more than", "lower than", "lower than or equal to", "not higher than", and "below" may be used interchangeably.

In some embodiments, an apparatus may be construed as physical or virtual, and its names are not limited to those described in the embodiments. In some cases, terms such as "apparatus", "equipment", "device", "circuit", "network element", "node", "function", "unit", "section", "system", "network", "chip", "chip system", "entity" and "subject" are interchangeable.

In some embodiments, the term "network" may be interpreted as an apparatus included in a network (e.g., a network device, an access network device, a core network device, etc.).

In some embodiments, the network device may be at least one of the access network device or the core network device.

In some embodiments, the terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", and "bandwidth part (BWP)" may be used interchangeably.

In some embodiments, the terms "terminal", "terminal", "UE", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "wireless terminal", "remote terminal", "handset", "user agent", "mobile client", and "client" may be used interchangeably.

In some embodiments, the access network device, the core network device, or the network device may be replaced with a terminal. For example, the embodiments of the disclosure may also be applied to a structure where communication between the access network device, the core network device, or the network device and the terminal is replaced with communication among a plurality of terminals (such as device-to-device (D2D), vehicle-to-everything (V2X), etc.). In this case, a structure may also be adopted in which the terminal has all or part of the functions of the access network device. In addition, terms such as "uplink" and "downlink" may also be replaced with terms corresponding to communication between terminal (such as "sidelink"). For example, uplink channels, downlink channels and the like may be replaced with sidelink channels or direct communication channels, and uplink, downlink and the like may be replaced with sidelink or direct link.

In some embodiments, the terminal may be replaced with the access network device, the core network device, or the network device. In this case, a structure may also be adopted in which the access network device, the core network device, or the network device has all or part of the functions of the terminal.

In some embodiments, acquiring data, information, etc., may comply with the laws and regulations of the country where it is located.

In some embodiments, data, information, etc., may be acquired with the user's consent.

In addition, each element, each row, or each column in the tables of the embodiments of the disclosure may be implemented as a separate embodiment, and any combination of any elements, any rows, or any columns may also be implemented as a separate embodiment.

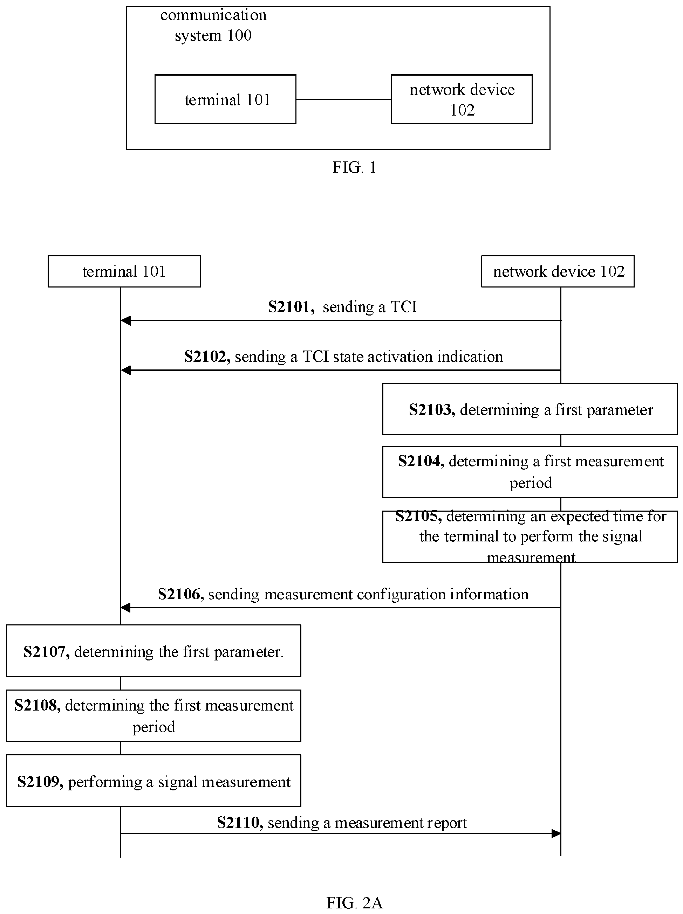

FIG. 1 is a schematic architecture diagram of a communication system according to an embodiment of the disclosure. As shown in FIG. 1, a communication system 100 may include a terminal 101 and a network device 102.

In some embodiments, the terminal 101 may include at least one of a mobile phone, a wearable device, an Internet of Things (IoT) device, a vehicle with communication functions, an intelligent vehicle, an on-board terminal, a tablet computer (Pad), a computer with wireless transceiving functions, a road side unit (RSU), a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, or a wireless terminal in a smart home, but is not limited thereto.

In some embodiments, the network device 102 may include at least one of an access network device or a core network device.

In some embodiments, the access network device may be a node or device that connects a terminal to a wireless network. The access network device may include at least one of an evolved nodeB (eNB) in a fifth generation (5G) communication system, a next generation eNB (ng-eNB), a next generation nodeB (gNB), a node B (NB), a home nodeB (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (open RAN), a cloud base station (cloud RAN), a base station in other communication systems, or an access node in a wireless fidelity (Wi-Fi) system, but is not limited thereto.

In some embodiments, the technical solutions of the disclosure may be applicable to the open RAN architecture. In this case, interfaces between access network devices or within the access network device involved in the embodiments of the disclosure may be changed to internal interfaces of the open RAN, and procedures and information interactions between these internal interfaces may be implemented by software or programs.

In some embodiments, the access network device may be composed of a central unit (CU) and a distributed unit (DU), where the CU may also be referred to as a control unit. The adoption of a CU-DU structure may split protocol layers of the access network device, functions of some protocol layers are placed in the CU for centralized control, and the remaining part or all of the functions of the protocol layers are distributed in the DU, with the CU centrally controlling the DU, but is not limited thereto.

**In** some embodiments, the core network device may be a single device, or a plurality of devices or a device cluster. A core network may include at least one of an evolved packet core (EPC), a 5G core network (5GCN), or a next generation core (NGC).

The communication system described in the embodiments of the disclosure is intended to illustrate the technical solutions of the embodiments of the disclosure more clearly, and does not constitute a limitation on the technical solutions in the embodiments of the disclosure. Those of ordinary skill in the art will appreciate that, with the evolution of system architectures and the emergence of new service scenarios, the technical solutions provided in the embodiments of the disclosure are also applicable to similar technical problems.

The following embodiments of the disclosure may be applied to the communication system 100 shown in FIG. 1 or some subjects thereof, but are not limited thereto. The subjects shown in FIG. 1 are exemplary; a communication system may include all or some of the subjects in FIG. 1, and may also include other subjects beyond those in FIG. 1. The number and form of each subject are arbitrary; each subject may be physical or virtual. Connection relationships between the subjects are exemplary. The subjects may or may not be connected to each other, the connection between the subjects may be in any manner, which may be a direct connection or an indirect connection, and may be a wired connection or a wireless connection.

The embodiments of the disclosure may be applied to long term evolution (LTE), LTE-advanced (LTE-A), LTE-beyond (LTE-B), SUPER 3G, international mobile telecommunications-advanced (IMT-Advanced), 4th generation mobile communication system (4G), 5th generation mobile communication system (5G), 5G new radio (NR), future radio access (FRA), new-radio access technology (new RAT), NR, new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wide band (UWB), Bluetooth (registered trademark), public land mobile network (PLMN), device-to-device (D2D) system, machine to machine (M2M) system, IoT system, vehicle-to-everything (V2X), systems using other measurement methods, next-generation systems extended based on them, etc. In addition, a plurality of systems may be combined (for example, a combination of LTE or LTE-A and 5G, etc.) for application.

In some embodiments of the disclosure, the above communication system may support LTM. Based on LTM, the network device may configure the terminal with a plurality of candidate cells (or candidate cell group), and the network device may control the terminal to perform handover or change a serving cell among the plurality of candidate cells (or candidate cell group) by means of L1 signaling or L2 signaling.

For example, the terminal may change the serving cell (or cell group) from "candidate cell (or candidate cell group)-1" to "candidate cell (or candidate cell group)-2" according to the L1 signaling or the L2 signaling from the network device. One serving cell (or cell group) may correspond to one or more candidate cells (or candidate cell groups).

**In** some embodiments, the above L1 signaling may include downlink control information (DCI).

In some embodiments, the above L2 signaling may include medium access control control element (MAC CE).

In some embodiments, the above cell may also be a transmission/reception point (TRP), and the above cell group may also be a TRP group.

In some embodiments of the disclosure, based on LTM, the network device may configure at least one neighbor cell for the terminal, and the terminal may perform a signal measurement on the at least one neighbor cell, for example, perform the signal measurement based on a reference signal. In some embodiments, the reference signal may be an SSB, a channel state information reference signal (CSI-RS), or other reference signals. In some embodiments, terms such as "SSB" and "synchronization signal and physical downlink broadcast channel block" are interchangeable.

In some embodiments, the signal measurement may be measurement for the LTM.

In some embodiments, the name of the signal measurement is not limited, and may be, for example, "L1 measurement", "LTM-based measurement", "intra-frequency measurement", "neighbor cell measurement", "intra-frequency neighbor cell measurement", "intra-frequency L1 measurement", "L1-reference signal received power (RSRP) measurement", "L1-signal to interference plus noise ratio (SINR) measurement", "L1-reference signal received quality (RSRQ) measurement", "intra-frequency L1-RSRP measurement", "intra-frequency L1-SINR measurement", "intra-frequency L1-RSRQ measurement", etc.

In some embodiments, through the above signal measurement, the terminal may obtain at least one of the following measurement results:
an L1-RSRP;
an L1-SINR; or
an L1-RSRQ.

In some embodiments, if there are a plurality of frequency layers, and a plurality of neighbor cells exist in each frequency layer, the terminal performs the signal measurement on the plurality of neighbor cells. For example, the terminal may perform the L1-RSRP measurement based on a reference signal. In some embodiments, terms such as "frequency layer", "component carrier (CC)", "frequency carrier", "carrier frequency", "carrier", "frequency", "frequency range (FR)" and "frequency point" are interchangeable.

**In** some embodiments, if an RTD between reference signals (such as SSB) from a plurality of target cells is less than or equal to a CP, the terminal may use a single FFT processor to process these SSBs when the SSBs from the plurality of target cells overlap. The plurality of target cells include the serving cell and the neighbor cell(s) of the terminal. In some embodiments, the plurality of target cells may be cells on the same frequency layer. In some embodiments, terms such as "RTD", "timing offset (TO)", "signal time difference" and "receiving signal time difference" are interchangeable.

In other embodiments, if an RTD between reference signals (such as SSB) from a plurality of target cells is greater than the CP, the terminal cannot use a single FFT processor to process these SSBs in parallel when the SSBs from the plurality of target cells overlap. The plurality of target cells may include the serving cell and the neighbor cell(s) of the terminal. In some embodiments, the plurality of target cells may be cells on the same frequency layer.

In an implementation, the terminal supports a capability of RTD > CP. For example, the terminal may be configured with a plurality of FFT processors, and when SSBs from a plurality of target cells overlap, the terminal may use the plurality of FFT processors to process these SSBs.

In some embodiments of the disclosure, a measurement period may be set, and the signal measurement may be performed according to the measurement period. To implement the measurement on the target cell under different conditions (scenarios), different measurement periods may be set.

In some embodiments, a first condition may be set, and different measurement periods may be determined according to whether the terminal satisfies the first condition.

The first condition may be configured to determine that the terminal is capable of performing a signal measurement on the neighbor cell and the serving cell respectively based on different FFT processors. In some embodiments, terms such as "capable of/can", "may", "need", "expect" and "be expected to" are interchangeable.

In some embodiments, the first condition may include at least one of the following:
that the terminal supports a first capability, where the first capability is a capability that the terminal supports that an RTD of a plurality of target cells is greater than a CP, and the plurality of target cells include the serving cell and/or the neighbor cell(s) of the terminal;
that the terminal is provided with a first processor, where the first processor may be an FFT processor capable of measuring the neighbor cell(s);
that a time difference of signals received by the terminal from a plurality of target cells can be greater than the CP.

For example, the first condition may include that: the time difference of signals received by the terminal from the plurality of target cells (serving cell and/or neighbor cell(s)) can be greater than the CP, and the terminal supports the first capability (the capability of RTD > CP).

For another example, the first condition may include that: the time difference of signals received by the terminal from the plurality of target cells can be greater than the CP, and the terminal is provided with the first processor, where the first processor may be the FFT processor dedicated to the neighbor cell measurement.

For another example, the first condition may include that: the terminal supports the first capability, and the terminal is provided with the first processor.

For another example, the first condition may include that: the time difference of signals received by the terminal from the plurality of target cells can be greater than the CP, or the terminal is provided with the first processor, or the time difference of signals received by the terminal from the plurality of target cells can be greater than the CP.

In an implementation, the first capability may also be referred to as "the capability of RTD > CP".

In an implementation, the first processor may include the FFT processor dedicated to measuring the neighbor cell. In some embodiments, the first processor may also include an FFT processor not used by the serving cell, which may be allocated to be specially used for measuring the neighbor cell within a certain period of time. For example, if FFT processors of the terminal remain after being occupied by the serving cell, the remaining FFT processors may be defined as the first processor. The first processor may include one or more FFT processors.

In some embodiments, the terminal may also be provided with a second processor, where the second processor may be an FFT processor capable of measuring the serving cell. The second processor may include one or more FFT processors.

For example, the terminal has M1 processors, among which M2 processors may be configured as the second processor for measuring the serving cell, and M3 processors may be configured as the first processor for measuring the neighbor cell, where the sum of M2 and M3 is less than or equal to M1.

In an implementation, it may be determined according to a network configuration that the time difference of signals received by the terminal from a plurality of target cells can be greater than the CP. For example, if a relative distance between the plurality of target cells is greater than a threshold, it may be determined that the time difference of signals received by the terminal from the plurality of target cells can be greater than the CP. For another example, if a specific flag bit exists in the configuration delivered by the network device, it may be determined that the time difference of signals received by the terminal from the plurality of target cells can be greater than the CP.

In an implementation, the time difference of signals received by the terminal from the plurality of target cells being greater than the CP may be used to indicate that.

In some embodiments of the disclosure, a third measurement period may be determined according to second information, and the signal measurement may be performed according to the third measurement period. For example, the signal measurement may be performed on the serving cell and the neighbor cell(s) according to the third measurement period.

In some embodiments, the third measurement period may be determined according to the second information in a case where the terminal does not satisfy the first condition.

In some embodiments, the name of the third measurement period is not limited, and may be, for example, "measurement period", "intra-frequency measurement period", "intra-frequency L1-RSRP measurement period", "intra-frequency L1-RSRP measurement period based on frequency range 1 (FR1)", etc.

In some embodiments, the second information includes at least one of:
whether the terminal is configured with DRX;
a DRX cycle T_{DRX} of the terminal;
a measurement report period T_{Report} of the terminal;
a period T_{SSB_NBC} of an SSB index of the neighbor cell of the terminal;
a period T_{SSB} of an SSB index of the serving cell of the terminal;
a third parameter M, in which the third parameter M is a parameter determined according to an upper layer configuration;
a fourth parameter P, in which the fourth parameter P is a parameter determined according to a measurement gap (GAP) configured for the terminal and a slot occasion of an SSB; or
a fifth parameter K, in which the fifth parameter K is a preset parameter.

In an implementation, the above third parameter may be determined in any of the following manners:
in a case where timeRestrictionForChannelMeasurement is configured at a higher layer, the third parameter M may be 1;
in a case where timeRestrictionForChannelMeasurement is configured at a higher layer, the third parameter M may be 3;
the third parameter M may be a value preset by the terminal, such as 1 or 3; in some embodiments, the terminal may send the third parameter M to the network device; and
the third parameter M may be a value preset by the network device, such as 1 or 3; in some embodiments, the network device may send the third parameter M to the terminal.

In an implementation, the above fourth parameter P may be determined in any of the following manners:
the fourth parameter P may be a value preset by the terminal or configured by the network device, such as 1;
in a case where the GAP configured for the terminal overlaps with the slot occasion of the SSB, the fourth parameter P is calculated according to the formula $P = \frac{1}{1 - \frac{{T}_{SSB_NBC}}{MGRP}}$, where T_{SSB_NBC} represents the period of the SSB index of the neighbor cell of the terminal, and MGRP represents a measurement gap repetition period; the GAP includes at least one of: a GAP for intra-frequency neighbor cell measurement, a GAP for inter-frequency neighbor cell measurement, and a GAP for inter-RAT neighbor cell measurement; and
in a case where the GAP configured for the terminal does not overlap with the slot occasion of the SSB, the fourth parameter P may be a preset value (such as 1).

In an implementation, the above fifth parameter K may be determined in any of the following manners:
the fifth parameter K may be a value preset by the terminal or configured by the network device, such as 1 or 1.5;
in a case where T_{SSB_NBC} is less than or equal to a first preset duration (such as 40 milliseconds) and the terminal has enabled a high-speed measurement, the fifth parameter K may be 1; otherwise, the fifth parameter K may be 1.5, where enabling the high-speed measurement by the terminal means that the terminal is configured with highSpeedMeasFlag-r16 or highSpeedMeasCA-Scell-r17.

By adopting the above manners, the second information may be determined according to different configurations or different scenarios of the terminal, so that the third measurement period may be flexibly determined.

In some embodiments, the manner of determining the third measurement period according to the second information may be shown in Table 1 below:

**Table 1**

| configuration | third measurement period |
|---|---|
| non-DRX | max(T_{Report}, ceil(M*P)*T_{SSB_NBC}) |
| DRX cycle ≤ second preset duration | max(T_{Report}, ceil(K*M*P)*max(T_{DRX},T_{SSB_NBC})) |
| DRX cycle > second preset duration | ceil(M*P)*T_{DRX} |

As shown in Table 1, the third measurement period may be calculated in different manners according to different configurations of the terminal.

In a case where the terminal is not configured with the DRX, the third measurement period may be calculated according to the formula: max(T_{Report}, ceil(M*P)*T_{SSB_NBC}).

In a case where the terminal is configured with the DRX and the DRX cycle is less than or equal to the second preset duration (such as 320 milliseconds), the third measurement period may be calculated according to the formula: max(T_{Report}, ceil(K*M*P)*max(T_{DRX},T_{SSB_NBC})).

In a case where the terminal is configured with the DRX and the DRX cycle is greater than the second preset duration (such as 320 milliseconds), the third measurement period may be calculated according to the formula: ceil(M*P)*T_{DRX}.

In some embodiments, in Table 1, max represents a mathematical maximum operation, e.g., max(x, y) denotes the larger value of x and y; ceil represents a mathematical ceiling operation, e.g., ceil(x) denotes the smallest integer greater than or equal to x; * denotes a mathematical multiplication sign; T_{DRX} is the DRX cycle of the terminal; T_{Report} is the measurement report period of the terminal; T_{SSB_NBC} is a period of the SSB index of a neighbor cell of the terminal; M is the third parameter mentioned above; P is the fourth parameter mentioned above; K is the fifth parameter mentioned above.

In some embodiments, the parameters in Table 1 may also refer to descriptions in 3GPP protocols.

It should be noted that each row or each column in Table 1 may be implemented as an independent embodiment, and any combination of rows and columns may also be implemented as an independent embodiment.

In some embodiments, the measurement period for the terminal to measure the serving cell and the measurement period for measuring the neighbor cell may be the same or different. For example, the third measurement period may also be a period for the terminal to measure the serving cell. For instance, the terminal may measure the serving cell according to the third measurement period.

By adopting the above method, different measurement periods may be determined according to different configurations, which improves a flexibility of measurement period configuration and enhances a measurement accuracy.

In other embodiments of the disclosure, the first measurement period may be determined, and the signal measurement may be performed on the neighbor cell(s) according to the first measurement period.

In some embodiments, the first measurement period is a period for the terminal to measure the neighbor cell(s) in a case where the first condition is satisfied.

In some embodiments, the name of the first measurement period is not limited, and may be, for example: "neighbor cell measurement period", "intra-frequency neighbor cell measurement period", "intra-frequency measurement period", "intra-frequency L1-RSRP measurement period", "intra-frequency L1-RSRP measurement period based on FR1", "measurement period applicable to a terminal supporting the capability of RTD > CP", "intra-frequency measurement period applicable to a terminal supporting the capability of RTD > CP", "intra-frequency L1-RSRP measurement period applicable to a terminal supporting the capability of RTD > CP", "intra-frequency L1-RSRP measurement period based on FR1 applicable to a terminal supporting the capability of RTD > CP", etc.

In some embodiments, the first measurement period may be determined in a case where the terminal satisfies the first condition mentioned above.

In some embodiments of the disclosure, the terminal may determine the first measurement period according to a first parameter (P_{FFT}).

In some embodiments, the first parameter may be a measurement period scaling factor corresponding to the neighbor cell. In some embodiments, the first parameter may be referred to as "scaling factor", "measurement period scaling factor", "L1-RSRP measurement period scaling factor", or "P_{FFT}".

In some embodiments, the first measurement period may be obtained by multiplying the third measurement period by the first parameter. The calculation method of the third measurement period may refer to the descriptions in the foregoing embodiments of the disclosure, which are not repeated here.

In some embodiments, in a case where the terminal satisfies the first condition, the third measurement period is multiplied by the first parameter to obtain the first measurement period, and the signal measurement is performed on the neighbor cell(s) according to the first measurement period. In a case where the first condition is not satisfied, the signal measurement continues to be performed on the neighbor cell(s) according to the third measurement period.

In other embodiments, the first measurement period may be determined according to the first parameter and the second information mentioned above. The second information may refer to the descriptions in the foregoing embodiments, which are not repeated here.

In some embodiments, the manner of determining the first measurement period according to the first parameter and the second information may be shown in Table 2 below:

**Table 2**

| configuration | first measurement period |
|---|---|
| non-DRX | max(T_{Report}, ceil(M*P)*T_{SSB_NBC}) *P_{FFT}) |
| DRX cycle ≤ third preset duration | max(T_{Report}, ceil(K*M*P)*max(T_{DRX},T_{SSB_NBC}) *P_{FFT}) |
| DRX cycle > third preset duration | ceil(M*P)*T_{DRX}*P_{FFT} |

As shown in Table 2, the first measurement period may be calculated in different manners according to different configurations of the terminal.

In a case where the terminal is not configured with the DRX, the first measurement period may be calculated according to the formula: max(T_{Report}, ceil(M*P)*T_{SSB_NBC}) *P_{FFT}).

In a case where the terminal is configured with the DRX and the DRX cycle is less than or equal to the second preset duration (such as 320 milliseconds), the first measurement period may be calculated according to the formula: max(T_{Report}, ceil(K*M*P)*max(T_{DRX},T_{SSB_NBC}) *P_{FFT}).

In a case where the terminal is configured with the DRX and the DRX cycle is greater than the second preset duration (such as 320 milliseconds), the first measurement period may be calculated according to the formula: ceil(M*P)*T_{DRX}*P_{FFT}.

**In** some embodiments, in Table 2, max represents a mathematical maximum operation, e.g., max(x, y) denotes the larger value of x and y; ceil represents a mathematical ceiling operation, e.g., ceil(x) denotes the smallest integer greater than or equal to x; * denotes a mathematical multiplication sign; T_{DRX} is the DRX cycle of the terminal; T_{Report} is the measurement report period of the terminal; T_{SSB_NBC} is a period of the SSB index of a neighbor cell of the terminal; M is the third parameter mentioned above; P is the fourth parameter mentioned above; K is the fifth parameter mentioned above; P_{FFT} represents the first parameter.

In some embodiments, parameters other than the first parameter P_{FFT} in Table 2 may also refer to descriptions in 3GPP protocols.

It should be noted that each row or each column in Table 2 may be implemented as an independent embodiment, and any combination of rows and columns may also be implemented as an independent embodiment.

In some embodiments, the first parameter P_{FFT} may be 1. If the first parameter is equal to 1, the first parameter may be omitted, and the third measurement period described above may be directly used as the first measurement period.

In some embodiments, the measurement period for the terminal to measure the serving cell and the measurement period for measuring the neighbor cell may be the same or different. For example, the first measurement period may also be a period for the terminal to measure the serving cell. For instance, the terminal may measure the serving cell according to the first measurement period.

By adopting the above method, different measurement periods may be configured for the neighbor cell(s) according to different configurations, which improves the flexibility of measurement period configuration for neighbor cells and enhances the measurement accuracy.

FIG. 2A is an interactive schematic diagram of a measurement method according to an embodiment of the disclosure. The method may be executed by the communication system described above. As shown in FIG. 2A, the method may include the following steps.

In step S2101, the network device sends a TCI to a terminal.

In some embodiments, the terminal may receive the TCI. For example, the terminal may receive the TCI sent by the network device.

In some embodiments, the TCI may be used to configure a TCI state list for the terminal.

In some embodiments, the terminal may be configured with one or more TCI state lists.

In some embodiments, the network device may send a first message, and the first message may include the TCI. For example, the network device may send the first message to the terminal. In some embodiments, the terminal may receive the first message.

In some embodiments, the first message may include at least one of an RRC message, a MAC CE, DCI, or other messages sent by the network device to the terminal.

In some embodiments, step S2101 may be omitted. For example, the network device may not send the TCI, and the terminal is not configured with the TCI. For another example, the terminal may autonomously implement the function indicated by the TCI, such as autonomously configuring the TCI state list.

In step S2102, the network device sends a TCI state activation indication to the terminal.

In some embodiments, the terminal may receive the TCI state activation indication. For example, the terminal may receive the TCI state activation indication sent by the network device.

In some embodiments, the TCI state activation indication may be used to activate a TCI state, for example, to determine an activated TCI state list.

In some embodiments, the TCI state activation indication may be used to determine TCI information of the terminal, and t the TCI information is configured to determine whether any neighbor cell is present on the active TCI state list.

In some embodiments, the terminal may activate one or more TCI state lists.

In some embodiments, the network device may send a second message, and the second message may include the above state activation indication. For example, the network device may send the second message to the terminal. In some embodiments, the terminal may receive the second message.

In some embodiments, the second message may include at least one of an RRC message, a MAC CE, a DCI, or other messages sent by the network device to the terminal.

In some embodiments, step S2102 may be omitted, and the terminal may autonomously implement functions related to the TCI activation indication.

For example, in a case where the network device does not send the TCI activation indication, or the terminal does not receive the TCI activation indication, the terminal has no activated TCI state list.

For another example, the terminal may activate the TCI state at a specified time after receiving the TCI, so as to determine the activated TCI state list.

For another example, the terminal may periodically activate the TCI state after receiving the TCI, so as to determine the activated TCI state list.

In step S2103, the network device determines a first parameter.

In some embodiments, the first parameter may be a measurement period scaling factor corresponding to the neighbor cell. In some embodiments, the first parameter may be referred to as P_{FFT}.

In some embodiments, the first parameter may be a measurement period scaling factor determined according to a capability of the terminal.

In some embodiments, the first parameter (P_{FFT}) may be a preset value, for example, the first parameter is 2 or 10.

In some embodiments, the first parameter (P_{FFT}) may be determined according to first information, and the first information may be information related to the neighbor cell(s) of the terminal.

In some embodiments, the first information may include at least one of:
TCI information, in which the TCI information is configured to determine whether any neighbor cell is present on an active TCI state list;
a first number, in which the first number is a number of neighbor cells;
a second number, in which the second number is a number of first-type neighbor cells, and a first-type neighbor cell is a neighbor cell present on the active TCI state list;
a third number, in which the third number is a number of second-type neighbor cells, a second-type neighbor cell is a neighbor cell not present on the active TCI state list;
a fourth number, in which the fourth number is a number of first processors, and a first processor is an FFT processor capable of measuring the neighbor cell;
a fifth number, in which the fifth number is a number of first processors allocated for use by the first-type neighbor cell; or
a sixth number, in which the sixth number is a number of first processors allocated for use by the second-type neighbor cell.

In some embodiments, the first number, the second number, the third number, the fourth number, the fifth number, and the sixth number may all be integers greater than or equal to 0. In some embodiments, a sum of the second number and the third number may be less than or equal to the first number. In some embodiments, a sum of the fifth number and the sixth number may be less than or equal to the fourth number.

In some embodiments, the activated TCI state list may be determined according to step S2101 and/or step S2102.

In some embodiments, the terminal may have two types of neighbor cells, where a first-type neighbor cell is a cell present on the activated TCI state list, and the second-type neighbor cell is a cell not present on the activated TCI state list. In some embodiments, the terminal may also have no such first-type neighbor cells, for example, the second number is equal to 0. In some embodiments, the terminal may have only second-type neighbor cells, for example, the second number is 0; the terminal may also have only first-type neighbor cells, for example, the third number is 0.

In some embodiments, the above neighbor cell(s) may be neighbor cell(s) configured for the terminal by the network device.

In some embodiments, the above neighbor cell(s) may be neighbor cell(s) that the terminal expects to measure. In some embodiments, the neighbor cell(s) expected to be measured may be a subset or a full set of the neighbor cell(s) configured for the terminal by the network device. For example, the network device configures three neighbor cells NC1, NC2, and NC3 for the terminal, and the above neighbor cell(s) may be NC1, NC2, and NC3, or NC1 and NC2, or any one of NC1, NC2, and NC3.

In some embodiments, the above neighbor cell(s) may be neighbor cell(s) selected by the terminal. For example, the neighbor cell(s) configured for the terminal by the network device include x cells from NC-1 to NC-x, and the terminal may select y cells from the x cells as the neighbor cell(s) expected to be measured.

In some embodiments, the terminal may report the neighbor cell(s) expected to be measured (or selected neighbor cell(s)) to the network device, or report the maximum number of neighbor cell(s) expected to be measured to the network device. In some embodiments, the network device may determine the foregoing neighbor cell(s) according to the maximum number reported by the terminal, or the network device may determine at least one of the first number, the second number, or the third number according to the maximum number reported by the terminal.

In embodiments of the disclosure, there are a plurality of implementations for determining the first parameter according to the first information, for example as follows.

In some embodiments, in a case where the first number is determined to be less than or equal to the fourth number, the first parameter is determined as P11, where P11 is a preset positive integer. In some embodiments, P11 may be equal to 1.

In some embodiments, in a case where the first number (the number of neighbor cells) is determined to be less than or equal to the fourth number (the number of FFT processors capable of measuring the neighbor cell), the first parameter is determined as P11.

For example, when at least one symbol of an SSB from a target cell (including a serving cell and/or a neighbor cell(s)) is overlapped or adjacent in a time domain, if a number of neighbor cells to be measured by the terminal is 1 (i.e., N1 = 1, the first number is 1), P11 may be 1, that is, the first parameter (P_{FFT}) is 1.

For another example, the number of first processors of the terminal (i.e., the fourth number) is M. As long as the number of neighbor cells is less than or equal to M, one first processor may be allocated to each neighbor cell, and the first parameter (P_{FFT}) may also be 1.

In some embodiments, in a case where the first number is less than or equal to the fourth number, one first processor may be allocated to each neighbor cell, that is, the number of FFT processors may meet a requirement of parallel processing of neighbor cells, and therefore the first parameter may be determined as 1.

In some embodiments, in a case where the first number is less than or equal to the fourth number, the first parameter may be omitted, and the third measurement period described above may be directly used as the first measurement period.

In this way, the first measurement period is determined according to the first parameter, and the neighbor cell is measured based on the first measurement period by using the first processor, which may improve the timeliness of the signal measurement.

In other embodiments, in a case where the first number is determined to be greater than the fourth number, the first parameter is determined according to the TCI information, the fourth number, and third information; in which the third information may include at least one of: the first number, the second number, the third number, the fifth number, or the sixth number.

In some embodiments, in a case where the first number is determined to be greater than the fourth number, the first parameter is determined according to the TCI information, the fourth number, and the third information.

In some embodiments, in a case where the first number is greater than the fourth number, one first processor cannot be allocated to each neighbor cell, that is, the FFT processor(s) cannot meet the requirement of the parallel processing of a plurality of neighbor cells, and therefore the measurement period of the neighbor cell(s) (i.e., the first measurement period) may be adjusted, so as to implement the signal measurement on the plurality of neighbor cells according to the first processor(s).

In some embodiments, in this embodiment, regardless of whether the first number is greater than the fourth number, the first parameter may be directly determined according to the TCI information, the fourth number, and the third information.

There are a plurality of optional implementations for determining the first parameter according to the TCI information, the fourth number, and the third information, for example as follows.

In a first implementation, in a case where it is determined according to the TCI information that one or more neighbor cells of the terminal are present on the active TCI state list, one or more first processors are allocated for use by one or more first-type neighbor cells, and the first parameter is determined according to the second number and the fourth number.

In some embodiments, in a case where it is determined according to the TCI information that one or more neighbor cells of the terminal are present on the active TCI state list, one or more first processors are allocated for use by one or more first-type neighbor cells, and the first parameter corresponding to the first-type neighbor cell is determined according to the second number and the fourth number.

In some embodiments, no first parameter may be configured for the second-type neighbor cell, or the first parameter corresponding to second-type neighbor cell may be determined as an invalid value (such as 0 or a specific value), so that the first processor may be used to preferentially measure the first-type neighbor cell without measuring the second-type neighbor cell.

In this way, the first processor may be preferentially allocated to the first-type neighbor cell, improving the measurement efficiency of the first-type neighbor cell.

There are also a plurality of manners for determining the first parameter according to the second number and the fourth number, for example as follows.

In an implementation, both the second number and the fourth number are positive integers, and the first parameter may be determined as P21, where P21 is equal to a value obtained by rounding up a quotient of the second number divided by the fourth number.

For example, in a case where it is determined according to the TCI information that that one or more neighbor cells of the terminal are present on the active TCI state list, the one or more first processors are allocated for use by the one or more first-type neighbor cells, and the first parameter (P_{FFT}) corresponding to the first-type neighbor cell is determined according to the following formula:
${P}_{FFT} = ceil \left(NcellList/{N}_{FFT 4}\right) ,$
where P_{FFT} represents the first parameter corresponding to the first-type neighbor cell, NcellList represents the second number (the number of first-type neighbor cells), N_{FFT4} represents the fourth number (the number of first processors), and ceil represents a mathematical ceiling operation.

In another implementation, in a case where the fourth number (N_{FFT4}) is equal to 1, the first parameter (P_{FFT}) corresponding to the first-type neighbor cell may be equal to the second number (NcellList).

In yet another implementation, in a case where the fourth number (N_{FFT4}) is greater than or equal to 1 and the second number (NcellList) is greater than or equal to the fourth number (N_{FFT4}), the first parameter (P_{FFT}) corresponding to the first-type neighbor cell may be equal to P21, where P21 is the value obtained by rounding up the quotient of the second number divided by the fourth number.

In a further implementation, in a case where the second number (NcellList) is less than or equal to the fourth number (N_{FFT4}), the first parameter may be determined as P22, where P22 is a preset positive integer. In some embodiments, P22 may be equal to 1.

In some embodiments, the number of first processors of the terminal (i.e., the fourth number) is equal to 1, and the number of first-type neighbor cells of the terminal (i.e., the second number) is greater than or equal to the number of first processors of the terminal. The neighbor cells include the first-type neighbor cell(s) and the second-type neighbor cell(s), where the number of first-type neighbor cells is the second number, then the first parameter (P_{FFT}) corresponding to the first-type neighbor cell may be equal to the second number (the number of first-type neighbor cells).

In this way, the first processor may preferentially process the first-type neighbor cell, improving the measurement reliability for the first-type neighbor cell.

In a second implementation, in a case where the fourth number is equal to N1 and it is determined according to the TCI information that one or more neighbor cells of the terminal are present on the active TCI state list, the signal measurement is performed on one or more first-type neighbor cells and one or more second-type neighbor cells by using the fourth number of first processors. The first parameter corresponding to the first-type neighbor cell is determined as a product of the second number and a first value, where the first value is a positive integer greater than or equal to 2. The first parameter corresponding to the second-type neighbor cell is determined as a product of the third number and the first value. In some embodiments, N1 is equal to 1 and the first value is equal to 2.

For example, in a case where it is determined according to the TCI information that t one or more neighbor cells of the terminal are present on the active TCI state list and the fourth number is equal to 1 (i.e., there is only one first processor), the signal measurement may be performed on the one or more first-type neighbor cells and the one or more second-type neighbor cells by using the one first processor. The first parameter (P_{FFT}) corresponding to the first-type neighbor cell may be equal to twice the second number (the number of first-type neighbor cells), and the first parameter (P_{FFT}) corresponding to the second-type neighbor cell may be equal to twice the third number (the number of second-type neighbor cells).

In this way, the first-type neighbor cell and the second-type neighbor cell share the first processor equally and may both be measured. Meanwhile, when the number of the first-type neighbor cells is less than the number of the second-type neighbor cells, a measurement priority of the first-type neighbor cell may be improved.

In a third implementation, in a case where the fourth number is greater than N1 and it is determined according to the TCI information that one or more neighbor cells of the terminal are present on the active TCI state list, the fifth number of first processors is allocated for use by one or more first-type neighbor cells, and the sixth number of first processors is allocated for use by one or more second-type neighbor cells. The first parameter corresponding to the first-type neighbor cell is determined according to the second number and the fifth number, where the fifth number is less than or equal to the second number. The first parameter corresponding to the second-type neighbor cell is determined according to the third number and the sixth number, where the sixth number is less than or equal to the third number. In some embodiments, N1 is equal to 1.

There are a plurality of manners for determining the fifth number and the sixth number, for example as follows.

For instance, in a case where the fourth number (the number of first processors) is greater than the second number (the number of first-type neighbor cells), the fifth number is equal to the second number, the sixth number may be less than or equal to a first difference (where the first difference is obtained by subtracting the second number from the fourth number), the first parameter corresponding to the first-type neighbor cell may be set to 1, and the first parameter corresponding to the second-type neighbor cell is determined according to the third number and the sixth number.

In this way, when the number of first processors is sufficient (greater than the number of first-type neighbor cells), each first-type neighbor cell may be preferentially allocated with one first processor, and the remaining first processors are then allocated to the one or more second-type neighbor cells.

For another example, in a case where the fourth number (the number of first processors) is less than or equal to the second number (the number of first-type neighbor cells), the fifth number is equal to the fourth number, the sixth number may be equal to 0, and the first parameter corresponding to the first-type neighbor cell is determined according to the second number and the fifth number.

In this way, the first processor may be preferentially allocated for use by the first-type neighbor cell.

For yet another example, in a case where the fourth number (the number of first processors) is less than or equal to the second number (the number of first-type neighbor cells), the sixth number may be equal to a preset value (e.g., 1), the fifth number may be equal to a second difference (where the second difference is obtained by subtracting the preset value from the fourth number), the first parameter corresponding to the first-type neighbor cell may be determined according to the second number and the fifth number, and the first parameter corresponding to the second-type neighbor cell may be determined according to the third number and the sixth number.

In this way, the sixth number (e.g., 1) of first processors may be reserved for the one or more second-type neighbor cells, and all other first processors may be allocated for use by the one or more first-type neighbor cells.

There are also a plurality of manners for determining the first parameter corresponding to the first-type neighbor cell according to the second number and the fifth number, for example as follows.

In an implementation, the first parameter corresponding to the first-type neighbor cells may be determined as P32, where P32 is a value obtained by rounding up a quotient of the second number divided by the fifth number. For example, the first parameter (P_{FFT}) corresponding to the first-type neighbor cell may be determined according to the following formula:
${P}_{FFT} = ceil \left(NcellList/{N}_{FFT 5}\right) ,$
where P_{FFT} represents the first parameter corresponding to the first-type neighbor cell, NcellList represents the second number (the number of first-type neighbor cells), N_{FFT5} represents the fifth number (the number of first processors capable of measuring the first-type neighbor cell), and ceil represents a mathematical ceiling operation.

In another implementation, in a case where the fifth number (N_{FFT5}) is equal to N1 (e.g., 1), the first parameter (P_{FFT}) corresponding to the first-type neighbor cell may be equal to the second number (NcellList).

In yet another implementation, in a case where the fifth number (N_{FFT5}) is equal to the second number (NcellList), the first parameter (P_{FFT}) corresponding to the first-type neighbor cells may be equal to P31, where P31 is a positive integer. For example, P31 may be equal to 1.

In a further implementation, in a case where the fifth number (N_{FFT5}) is greater than N1 (e.g., 1) and less than the second number (NcellList), the first parameter (P_{FFT}) corresponding to the first-type neighbor cell may be equal to P32, where P32 is a value obtained by rounding up the quotient of the second number divided by the fifth number.

There are also a plurality of manners for determining the first parameter corresponding to the second-type neighbor cell according to the third number and the sixth number, for example as follows.

In an implementation, the first parameter corresponding to the second-type neighbor cell may be determined as P42, where P42 is a value obtained by rounding up a quotient of the third number divided by the sixth number. For example, the first parameter (P_{FFT}) corresponding to the second-type neighbor cells may be determined according to the following formula:
${P}_{FFT} = ceil \left({N}_{NeighborCell}/{N}_{FFT 6}\right) ,$
where P_{FFT} represents the first parameter corresponding to the second-type neighbor cell, N_{NeighborCell} represents the third number (the number of second-type neighbor cells), N_{FFT6} represents the sixth number (the number of first processors capable for measuring the second-type neighbor cell), and ceil represents a mathematical ceiling operation.

In another implementation, in a case where the sixth number (N_{FFT6}) is equal to N1 (e.g., 1), the first parameter (P_{FFT}) corresponding to the second-type neighbor cell may be equal to the third number (N_{NeighborCell}).

In yet another implementation, in a case where the sixth number (N_{FFT6}) is equal to the third number (N_{NeighborCell}), the first parameter (P_{FFT}) corresponding to the second-type neighbor cell may be equal to P41, where P41 is a positive integer. For example, P41 may be equal to 1.

In a further implementation, in a case where the sixth number (N_{FFT6}) is greater than N1 (e.g., 1) and less than the third number (N_{NeighborCell}), the first parameter (P_{FFT}) corresponding to the second-type neighbor cell may be equal to P42, where P42 is the value obtained by rounding up the quotient of the third number divided by the sixth number.

In this way, a plurality of first processors may be respectively allocated to the one or more first-type neighbor cells and the one or more second-type neighbor cells for the signal measurement, which improves the reliability of the signal measurement.

In a fourth implementation, it is determined according to the TCI information that no neighbor cell of the terminal is present on the active TCI state list. One or more first processors are allocated for use by one or more second-type neighbor cells, and the first parameter corresponding to the second-type neighbor cell is determined according to the third number and the fourth number.

There are also a plurality of manners for determining the first parameter according to the third number and the fourth number, for example as follows.

In an implementation, the first parameter corresponding to the second-type neighbor cell may be determined as P51, where P51 is a value obtained by rounding up a quotient of the third number divided by the fourth number. For example, the first parameter (P_{FFT}) corresponding to the second-type neighbor cell may be determined according to the following formula:
${P}_{FFT} = ceil \left({N}_{NeighborCell}/{N}_{FFT 4}\right) ,$
where P_{FFT} represents the first parameter corresponding to the second-type neighbor cell, N_{NeighborCell} represents the third number (the number of second-type neighbor cells), N_{FFT4} represents the fourth number (the number of first processors), and ceil represents a mathematical ceiling operation.

In another implementation, in a case where the fourth number is equal to N1 (e.g., 1), the first parameter is determined as the third number.

In yet another implementation, in a case where the fourth number is greater than or equal to N1 (e.g., 1), the first parameter may be determined as P51, where P51 is the value obtained by rounding up the quotient of the third number divided by the fourth number.

In a further implementation, in a case where the fourth number is greater than or equal to N1 (e.g., 1), the first parameter may be determined as P52, where P52 is a number of frequency layers (e.g., frequency points) expected to be measured by the terminal.

In this way, in the absence of first-type neighbor cells, the one or more first processors may be allocated to the one or more second-type neighbor cells for the signal measurement.

In other embodiments, it is unnecessary to classify neighbor cells, or two types of neighbor cells may be processed uniformly, and the first parameter of the neighbor cell is determined according to the first information, for example as follows.

In an implementation, both the first number and the fourth number are positive integers, and the first parameter may be determined as P61, where P61 is a value obtained by rounding up a quotient of the first number divided by the fourth number. For example, the first parameter (P_{FFT}) may be determined according to the following formula:
${P}_{FFT} = ceil \left(Ncell/{N}_{FFT 4}\right) ,$
where P_{FFT} represents the first parameter, Ncell represents the first number (the number of neighbor cells), N_{FFT4} represents the fourth number (the number of first processors), and ceil represents a mathematical ceiling operation.

In another implementation, in a case where the first number is greater than the fourth number and the fourth number is equal to N1 (e.g., 1), the first parameter may be determined as the first number.

In yet another implementation, in a case where the first number is greater than the fourth number and the fourth number is greater than or equal to N1, the first parameter is determined as P61, where P61 is the value obtained by rounding up the quotient of the first number divided by the fourth number.

In a further implementation, in a case where the first number is greater than the fourth number and the fourth number is greater than or equal to N1, the first parameter is determined as P62, where P62 is a number of frequency layers expected to be measured by the terminal.

In another implementation, in a case where the first number is less than the fourth number, the first parameter may be determined as 1.

In this way, it is unnecessary to distinguish types of neighbor cells, and all neighbor cells share the one or more first processors for the signal measurement, improving the fairness of neighbor cell signal measurement.

In step S2104, the network device determines a first measurement period.

In some embodiments, the first measurement period is a period for the terminal to perform a measurement on the neighbor cell (a measurement period corresponding to the neighbor cell) in a case where a first condition is satisfied.

For optional implementations of the first condition, reference may be made to the descriptions in the foregoing embodiments of the disclosure, which are not repeated here.

In some embodiments, the network device may determine the first measurement period according to the first parameter. It should be noted that for optional implementations of determining the first measurement period according to the first parameter, reference may be made to the descriptions in the foregoing embodiments of the disclosure, which are not repeated here.

In some embodiments, the network device may determine the first measurement period according to the first parameter and the second information. It should be noted that for the second information and optional implementations of determining the first measurement period according to the first parameter and the second information, reference may be made to the descriptions in the foregoing embodiments of the disclosure, which are not repeated here.

In some embodiments, the network device may perform the foregoing steps S2103 and S2104 when determining that the terminal satisfies the first condition. For example, when determining that the terminal satisfies the first condition, the network device may determine the first parameter according to the first information, and determine the first measurement period according to the first parameter.

In step S2105, the network device determines an expected time for the terminal to perform the signal measurement.

In some embodiments, the network device may determine the expected time for the terminal to perform the signal measurement according to the first measurement period, and perform corresponding processing according to the expected time. For example, the network device determines or adjusts measurement-related parameters (such as a measurement report period, a measurement report threshold, and other parameters) according to the first measurement period.

In some embodiments, all or part of the foregoing steps S2103, S2104, and S2105 may be omitted.

In step S2106, the network device sends measurement configuration information to the terminal.

In some embodiments, the terminal may receive the measurement configuration information. For example, the terminal may receive the measurement configuration information sent by the network device.

In some embodiments, the network device may determine the measurement configuration information according to the first measurement period, and send the measurement configuration information to the terminal, instructing the terminal to perform the signal measurement according to the measurement configuration information.

In some embodiments, the measurement configuration information may be configured to instruct the terminal to perform the signal measurement.

In some embodiments, the measurement configuration information may be used to configure parameters related to the signal measurement for the terminal, such as a measurement report period, a measurement report threshold, and other parameters.

In some embodiments, the network device may send a third message, and the third message may include the foregoing measurement configuration information. For example, the network device may send the third message to the terminal. In some embodiments, the terminal may receive the third message.

The third message may include at least one of an RRC message, a MAC CE, DCI, or other messages sent by the network device to the terminal.

In some embodiments, step S2106 may be omitted, and the terminal may autonomously implement the function indicated by the measurement configuration information, or the foregoing function is default or preset.

In step S2107, the terminal determines the first parameter.

In some embodiments, the first parameter may be a measurement period scaling factor corresponding to the neighbor cell. In some embodiments, the first parameter may be referred to as P_{FFT}.

In some embodiments, the first parameter (P_{FFT}) may be a preset value, for example, the first parameter is 2 or 10.

In some embodiments, the first parameter (P_{FFT}) may be determined according to the first information, and the first information may be information related to the neighbor cell of the terminal.

It should be noted that for the optional implementations of the terminal determining the first parameter in step S2107, reference may be made to the optional implementations of the network device determining the first parameter in step S2103 of this embodiment, which are not repeated here.

In step S2108, the terminal determines the first measurement period.

In some embodiments, the first measurement period is a period for the terminal to measure the neighbor cell in a case where the first condition is satisfied (a measurement period corresponding to the neighbor cell).

It should be noted that for the optional implementations of the first condition, reference may be made to the descriptions in the foregoing embodiments of the disclosure, which are not repeated here.

In some embodiments, the terminal may determine the first measurement period according to the first parameter. It should be noted that for the optional implementations of determining the first measurement period according to the first parameter, reference may be made to the descriptions in the foregoing embodiments of the disclosure, which are not repeated here.

In some embodiments, the terminal may determine the first measurement period according to the first parameter and the second information. It should be noted that for the second information and the optional implementations of determining the first measurement period according to the first parameter and the second information, reference may be made to the descriptions in the foregoing embodiments of the disclosure, which are not repeated here.

In some embodiments, the terminal may perform the foregoing steps S2107 and S2108 when determining that the first condition is satisfied. For example, when determining that the first condition is satisfied, the terminal may determine the first parameter according to the first information, and determine the first measurement period according to the first parameter.

In step S2109, the terminal performs a signal measurement.

In some embodiments, the terminal may perform the signal measurement according to the first measurement period. In some embodiments, the terminal may perform the signal measurement on the neighbor cell according to the first measurement period.

In some embodiments, the terminal may also perform the signal measurement on the serving cell according to the third measurement period.

In some embodiments, the signal measurement may be a measurement for LTM.

In step S2110, the terminal sends a measurement report to the network device.

In some embodiments, the network device may receive the measurement report. For example, the network device may receive the measurement report sent by the terminal.

In some embodiments, the network device may control the terminal to perform mobility handover according to the measurement report.

In some embodiments, the terminal may send a fourth message, and the fourth message may include the foregoing measurement report. For example, the terminal may send the fourth message to the network device. In some embodiments, the network device may receive the fourth message.

The fourth message may include at least one of an RRC message, a MAC CE, uplink control information (UCI), or other messages sent by the terminal to the network device.

The methods involved in the embodiments of the disclosure may include at least one of the foregoing steps S2101 to S2110. For example, step S2103 may be implemented as an independent embodiment, step S2104 may be implemented as an independent embodiment, step S2107 may be implemented as an independent embodiment, step S2108 may be implemented as an independent embodiment, steps S2104 + S2105 may be implemented as an independent embodiment, steps S2103 + S2104 may be implemented as an independent embodiment, steps S2103 + S2104 + S2105 may be implemented as an independent embodiment, steps S2103 + S2104 + S2106 may be implemented as an independent embodiment, steps S2103 + S2104 + S2105 + S2106 may be implemented as an independent embodiment, steps S2103 + S2104 + S2105 + S2106 + S2110 may be implemented as an independent embodiment, steps S2108 + S2109 may be implemented as an independent embodiment, steps S2107 + S2108 may be implemented as an independent embodiment, steps S2107 + S2108 + S2109 may be implemented as an independent embodiment, steps S2108 + S2109 + S2110 may be implemented as an independent embodiment, steps S2107 + S2108 + S2109 + S2110 may be implemented as an independent embodiment, steps S2106 + S2107 + S2108 + S2109 + S2110 may be implemented as an independent embodiment, steps S2104 + S2106 + S2108 + S2109 + S2110 may be implemented as an independent embodiment, and steps S2103 + S2104 + S2105 + S2106 + S2107 + S2108 + S2109 + S2110 may be implemented as an independent embodiment, but are not limited thereto.

In some embodiments, the foregoing steps S2101 to S2110 may all be performed in an exchanged order or simultaneously.

In some embodiments, the foregoing steps S2101 to S2110 are all optional steps.

In some embodiments, reference may be made to other optional implementations described before or after the specification corresponding to FIG. 2A.

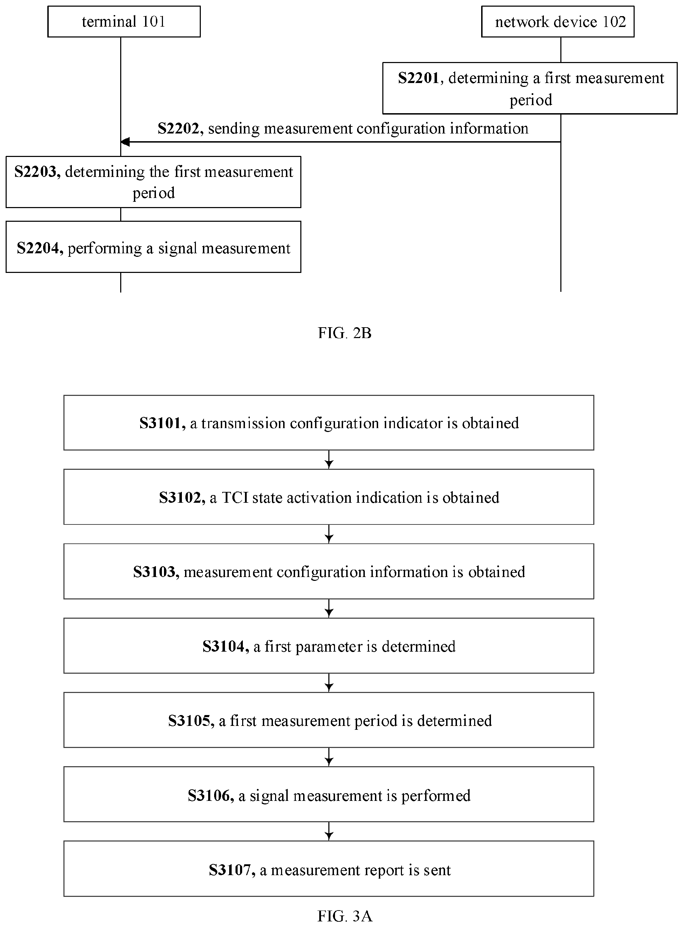

FIG. 2B is an interactive schematic diagram of a measurement method according to an embodiment of the disclosure. As shown in FIG. 2B, an embodiment of the disclosure relates to a measurement method, which may be performed by a communication system and may include the following step.

In step S2201, a network device determines a first measurement period.

For optional implementations of step S2201, reference may be made to the optional implementations of step S2104 in FIG. 2A and other relevant parts in the embodiments related to FIG. 2A, which are not repeated here.

In step S2202, the network device sends measurement configuration information to a terminal.

For optional implementations of step S2202, reference may be made to the optional implementations of step S2106 in FIG. 2A and other relevant parts in the embodiments related to FIG. 2A, which are not repeated here.

In step S2203, the terminal determines the first measurement period.

For optional implementations of step S2203, reference may be made to the optional implementations of step S2108 in FIG. 2A and other relevant parts in the embodiments related to FIG. 2A, which are not repeated here.

In step S2204, the terminal performs a signal measurement.

For optional implementations of step S2204, reference may be made to the optional implementations of step S2109 in FIG. 2A and other relevant parts in the embodiments related to FIG. 2A, which are not repeated here.

In some embodiments, the embodiment shown in FIG. 2B may also be combined with any one or more steps in the embodiment shown in FIG. 2A as a new embodiment.

FIG. 3A is a schematic flowchart of a measurement method according to an embodiment of the disclosure. As shown in FIG. 3A, an embodiment of the disclosure relates to a measurement method, which may be performed by a terminal and may include the following steps.

In step S3101, a TCI is obtained.

For optional implementations of step S3101, reference may be made to the optional implementations of step S2101 in FIG. 2A and other relevant parts in the embodiments related to FIG. 2A, which are not repeated here.

In some embodiments, the terminal may receive the TCI sent by a network device, but is not limited thereto, and the terminal may also receive the TCI sent by another subject.

In some embodiments, the terminal may obtain the TCI specified by a protocol.

In some embodiments, the terminal may obtain the TCI from an upper layer(s).

In some embodiments, the terminal may perform processing to obtain the TCI.

In some embodiments, step S3102 may be omitted, and the terminal may autonomously implement the function indicated by the TCI, or the foregoing function is default or preset.

In step S3102, a TCI state activation indication is obtained.

For optional implementations of step S3102, reference may be made to the optional implementations of step S2102 in FIG. 2A and other relevant parts in the embodiments related to FIG. 2A, which are not repeated here.

In some embodiments, the terminal may receive the TCI state activation indication sent by the network device, but is not limited thereto, and the terminal may also receive the TCI state activation indication sent by another subject.

In some embodiments, the terminal may obtain the TCI state activation indication specified by a protocol.

In some embodiments, the terminal may obtain the TCI state activation indication from an upper layer(s).

In some embodiments, the terminal may perform processing to obtain the TCI state activation indication.

In some embodiments, step S3102 may be omitted, and the terminal may autonomously implement the function indicated by the TCI state activation indication, or the foregoing function is default or preset.

In step S3105, measurement configuration information is obtained.

For optional implementations of step S3103, reference may be made to the optional implementations of step S2106 in FIG. 2A and other relevant parts in the embodiments related to FIG. 2A, which are not repeated here.

In some embodiments, the terminal may receive the measurement configuration information sent by the network device, but is not limited thereto, and the terminal may also receive the measurement configuration information sent by another subject.

In some embodiments, the terminal may obtain the measurement configuration information specified by a protocol.

In some embodiments, the terminal may obtain the measurement configuration information from an upper layer(s).

In some embodiments, the terminal may perform processing to obtain the measurement configuration information.

In some embodiments, step S3102 may be omitted, and the terminal may autonomously implement the function indicated by the measurement configuration information, or the foregoing function is default or preset.

In step S3104, a first parameter is determined.

For optional implementations of step S3104, reference may be made to the optional implementations of step S2107 in FIG. 2A and other relevant parts in the embodiments related to FIG. 2A, which are not repeated here.

In step S3105, a first measurement period is determined.

For optional implementations of step S3105, reference may be made to the optional implementations of step S2108 in FIG. 2A and other relevant parts in the embodiments related to FIG. 2A, which are not repeated here.

In step S3106, a signal measurement is performed.

In step S3106, for optional implementations of this step, reference may be made to the optional implementations of step S2109 in FIG. 2A and other relevant parts in the embodiments related to FIG. 2A, which are not repeated here.

In step S3107, a measurement report is sent.

In step S3107, for optional implementations of this step, reference may be made to the optional implementations of step S2110 in FIG. 2A and other relevant parts in the embodiments related to FIG. 2A, which are not repeated here.

In some embodiments, the terminal may send the measurement report to the network device, but is not limited thereto. The terminal may also send the measurement report to another entity.

The method according to an embodiment of the disclosure may include at least one of the foregoing steps S3101 to S3107. For example, step S3105 may be implemented as an independent embodiment, steps S3105 + S3106 may be implemented as an independent embodiment, steps S3105 + S3106 + S3107 may be implemented as an independent embodiment, steps S3104 + S3105 may be implemented as an independent embodiment, steps S3104 + S3105 + S3106 may be implemented as an independent embodiment, steps S3104 + S3105 + S3106 + S3107 may be implemented as an independent embodiment, steps S3103 + S3105 may be implemented as an independent embodiment, steps S3103 + S3104 + S3105 may be implemented as an independent embodiment, steps S3101 + S3102 + S3104 + S3105 may be implemented as an independent embodiment, steps S3101 + S3102 + S3103 + S3104 + S3105 may be implemented as an independent embodiment, and steps S3101 + S3102 + S3103 + S3104 + S3105 + S3106 may be implemented as an independent embodiment, but are not limited thereto.

In some embodiments, the foregoing steps S3101 to S3107 may all be performed in a different order or simultaneously.

In some embodiments, the foregoing steps S3101 to S3107 are all optional steps.

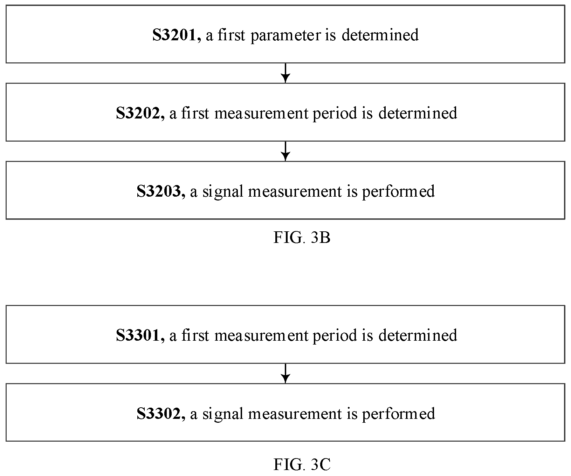

FIG. 3B is a schematic flowchart of a measurement method according to an embodiment of the disclosure. As shown in FIG. 3B, an embodiment of the disclosure relates to a measurement method, which may be performed by a terminal. The method may include the following step.

In step S3201, a first parameter is determined.

In step S3201, for optional implementations of this step, reference may be made to the optional implementations of step S2107 in FIG. 2A, step S3104 in FIG. 3A, and other relevant parts in the embodiments related to FIG. 2A and FIG. 3A, which are not repeated here.

In step S3202, a first measurement period is determined.

In step S3202, for optional implementations of this step, reference may be made to the optional implementations of step S2108 in FIG. 2A, step S3105 in FIG. 3A, and other relevant parts in the embodiments related to FIG. 2A and FIG. 3A, which are not repeated here.

In step S3203, a signal measurement is performed.

In step S3203, for optional implementations of this step, reference may be made to the optional implementations of step S2109 in FIG. 2A, step S3106 in FIG. 3A, and other relevant parts in the embodiments related to FIG. 2A and FIG. 3A, which are not repeated here.

In some embodiments, the foregoing steps are all optional steps.

In some embodiments, the embodiment shown in FIG. 3B may also be combined with any one or more steps in the embodiment shown in FIG. 3A to form a new embodiment.

FIG. 3C is a schematic flowchart of a measurement method according to an embodiment of the disclosure. As shown in FIG. 3C, an embodiment of the disclosure relates to a measurement method, which may be performed by a terminal. The method may include the following step.

In step S3301, a first measurement period is determined.

In step S3301, for optional implementations of this step, reference may be made to the optional implementations of step S2108 in FIG. 2A, step S3105 in FIG. 3A, and other relevant parts in the embodiments related to FIG. 2A and FIG. 3A, which are not repeated here.

In step S3302, a signal measurement is performed.

In some embodiments, the terminal may perform signal measurement on neighbor cells according to the first measurement period.

In step S3302, for optional implementations of this step, reference may be made to the optional implementations of step S2109 in FIG. 2A, step S3106 in FIG. 3A, and other relevant parts in the embodiments related to FIG. 2A and FIG. 3A, which are not repeated here.

In some embodiments, the foregoing steps are all optional steps.

In some embodiments, the embodiment shown in FIG. 3C may also be combined with any one or more steps in the embodiment shown in FIG. 3A to form a new embodiment.

In some embodiments, the first measurement period is a period for a terminal to perform a measurement on a neighbor cell in a case where a first condition is satisfied, the first condition is configured to determine that the terminal is capable of performing a signal measurement on the neighbor cell and a serving cell respectively based on different FFT processors, and the first parameter is a measurement period scaling factor corresponding to the neighbor cell.

In some embodiments, the first condition includes at least one of the following:
that the terminal supports a first capability, in which the first capability is a capability that the terminal supports that an RTD of a plurality of target cells is greater than a CP, and the plurality of target cells comprise the neighbor cell and/or the serving cell of the terminal;
that the terminal is provided with a first processor, in which the first processor is an FFT processor capable of measuring the neighbor cell; or
that a time difference of signals received by the terminal from a plurality of target cells can be greater than the CP.

In some embodiments, the method further includes:
determining the first parameter according to first information, in which the first information is information related to the neighbor cell of the terminal.

In some embodiments, the first information includes at least one of the following:
TCI information, in which the TCI information is configured to determine whether any neighbor cell is present on an active TCI state list;
a first number, in which the first number is a number of neighbor cells;
a second number, in which the second number is a number of first-type neighbor cells, and a first-type neighbor cell is a neighbor cell present on the active TCI state list;
a third number, in which the third number is a number of second-type neighbor cells, a second-type neighbor cell is a neighbor cell not present on the active TCI state list, and a sum of the third number and the second number is less than or equal to the first number;
a fourth number, in which the fourth number is a number of first processors, and a first processor is an FFT processor capable of measuring the neighbor cell;
a fifth number, in which the fifth number is a number of first processors allocated for use by the first-type neighbor cell; or
a sixth number, in which the sixth number is a number of first processors allocated for use by the second-type neighbor cell, and a sum of the fifth number and the sixth number is less than or equal to the fourth number.

In some embodiments, determining the first parameter according to the first information includes:
determining that the first number is less than or equal to the fourth number; and
determining the first parameter as P11, in which the P11 is a preset positive integer.

In some embodiments, determining the first parameter according to the first information includes:
determining that the first number is greater than the fourth number; and
determining the first parameter according to the TCI information, the fourth number and third information, in which the third information includes at least one of: the first number, the second number, the third number, the fifth number, or the sixth number.

In some embodiments, determining the first parameter according to the TCI information, the fourth number and the third information includes:
determining, according to the TCI information, that one or more neighbor cells of the terminal are present on the active TCI state list;
allocating one or more first processors for use by one or more first-type neighbor cells; and
determining, according to the second number and the fourth number, the first parameter corresponding to the first-type neighbor cell.

In some embodiments, determining, according to the second number and the fourth number, the first parameter corresponding to the first-type neighbor cell includes any one of:
determining the first parameter corresponding to the first-type neighbor cell as P21, in which the P21 is a value obtained by rounding up a quotient of the second number divided by the fourth number;
in a case where the fourth number is equal to N1, determining the first parameter as the second number, in which the N1 is a preset positive integer;
in a case where the fourth number is greater than or equal to the N1, and the second number is greater than or equal to the fourth number, determining the first parameter as the P21;
in a case where the second number is less than or equal to the fourth number, determining the first parameter as P22, in which the P22 is a preset positive integer.

In some embodiments, determining the first parameter according to the TCI information, the fourth number and the third information includes:
in a case where the fourth number is equal to N1, and it is determined according to the TCI information that one or more neighbor cells of the terminal are present on the active TCI state list, performing the signal measurement on one or more first-type neighbor cells and one or more second-type neighbor cells by using the fourth number of first processors;
determining the first parameter corresponding to the first-type neighbor cell as a product of the second number and a first value, in which the first value is a positive integer greater than or equal to 2; and
determining the first parameter corresponding to the second-type neighbor cell as a product of the third number and the first value.

In some embodiments, determining the first parameter according to the TCI information, the fourth number and the third information includes:
in a case where the fourth number is greater than N1, and it is determined according to the TCI information that one or more neighbor cells of the terminal are present on the active TCI state list, allocating the fifth number of first processors for use by one or more first-type neighbor cells, and allocating the sixth number of first processors for use by one or more second-type neighbor cells;
determining the first parameter corresponding to the first-type neighbor cell according to the second number and the fifth number, in which the fifth number is less than or equal to the second number; and
determining the first parameter corresponding to the second-type neighbor cell according to the third number and the sixth number, in which the sixth number is less than or equal to the third number.

In some embodiments, determining the first parameter corresponding to the first-type neighbor cell according to the second number and the fifth number includes any one of:
determining the first parameter corresponding to the first-type neighbor cell as P32, in which the P32 is a value obtained by rounding up a quotient of the second number divided by the fifth number;
in a case where the fifth number is equal to N1, determining the first parameter corresponding to the first-type neighbor cell as the second number;
in a case where the fifth number is equal to the second number, determining the first parameter corresponding to the first-type neighbor cell as P31, in which the P31 is a positive integer;
in a case where the fifth number is greater than the N1 and less than the second number, determining the first parameter corresponding to the first-type neighbor cell as the P32.

In some embodiments, determining the first parameter corresponding to the second-type neighbor cell according to the third number and the sixth number includes any one of:
determining the first parameter corresponding to the second-type neighbor cell as P42, in which the P42 is a value obtained by rounding up a quotient of the third number divided by the sixth number;
in a case where the sixth number is equal to N1, determining the first parameter corresponding to the second-type neighbor cell as the third number;
in a case where the sixth number is equal to the third number, determining the first parameter corresponding to the second-type neighbor cell as P41, in which the P41 is a positive integer;
in a case where the sixth number is greater than the N1 and less than the third number, determining the first parameter corresponding to the second-type neighbor cell as the P42.

In some embodiments, determining the first parameter according to the TCI information, the fourth number and the third information includes:
determining, according to the TCI information, that no neighbor cell of the terminal is present on the active TCI state list;
allocating one or more first processors for use by one or more second-type neighbor cells; and
determining, according to the third number and the fourth number, the first parameter corresponding to the second-type neighbor cell.

In some embodiments, determining, according to the third number and the fourth number, the first parameter corresponding to the second-type neighbor cell includes any one of:
determining the first parameter corresponding to the second-type neighbor cell as P51, in which the P51 is a value obtained by rounding up a quotient of the third number divided by the fourth number;
in a case where the fourth number is equal to N1, determining the first parameter as the third number;
in a case where the fourth number is greater than or equal to the N1, determining the first parameter as the P51;
in a case where the fourth number is greater than or equal to the N1, determining the first parameter as P52, in which the P52 is a number of frequency layers expected to be measured by the terminal.

In some embodiments, determining the first parameter according to the first information includes any one of:
determining the first parameter as P61, in which the P61 is a value obtained by rounding up a quotient of the first number divided by the fourth number;
in a case where the first number is greater than the fourth number, and the fourth number is equal to N1, determining the first parameter as the first number;
in a case where the first number is greater than the fourth number, and the fourth number is greater than or equal to the N1, determining the first parameter as the P61;
in a case where the first number is greater than the fourth number, and the fourth number is greater than or equal to the N1, determining the first parameter as P62, in which the P62 is a number of frequency layers expected to be measured by the terminal.

In some embodiments, determining the first measurement period according to the first parameter includes:
determining the first measurement period according to the first parameter and second information,
in which the second information includes at least one of:
   whether the terminal is configured with DR;
   a DRX cycle of the terminal;
   a measurement report period of the terminal;
   a period TSSB_NBC of an SSB index of the neighbor cell of the terminal;
   a third parameter M, in which the third parameter M is a parameter determined according to an upper layer configuration;
   a fourth parameter P, in which the fourth parameter P is a parameter determined according to a GAP configured for the terminal and a slot occasion of an SSB; or
   a fifth parameter K, in which the fifth parameter K is a preset parameter.
   In some embodiments, the neighbor cell is a neighbor cell expected to be measured by the terminal, and one or more neighbor cells expected to be measured are a subset or a full set of one or more neighbor cells configured by a network device for the terminal.

In some embodiments, the signal measurement is a measurement for an LTM.

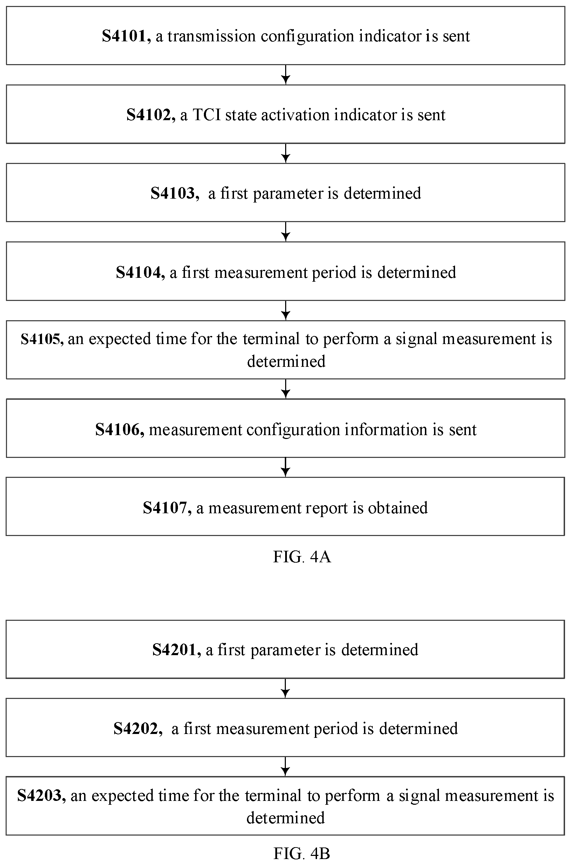

FIG. 4A is a schematic flowchart of a measurement method according to an embodiment of the disclosure. As shown in FIG. 4A, an embodiment of the disclosure relates to a measurement method, which may be performed by a network device. The method may include the following step.

In step S4101, a TCI is sent.

For optional implementations of step S4101, reference may be made to the optional implementations of step S2101 in FIG. 2A and other relevant parts in the embodiments related to FIG. 2A, which are not repeated here.

In some embodiments, the network device may send the TCI to a terminal, but is not limited thereto; the network device may also send the TCI to another entity.

In step S4102, a TCI state activation indicator is sent.

For optional implementations of step S4102, reference may be made to the optional implementations of step S2102 in FIG. 2A and other relevant parts in the embodiments related to FIG. 2A, which are not repeated here.

In some embodiments, the network device may send the TCI state activation indicator to a terminal, but is not limited thereto; the network device may also send the TCI state activation indicator to another entity.

In step S4103, a first parameter is determined.

For optional implementations of step S4103, reference may be made to the optional implementations of step S2103 in FIG. 2A and other relevant parts in the embodiments related to

In step S4104, a first measurement period is determined.

For optional implementations of step S4104, reference may be made to the optional implementations of step S2104 in FIG. 2A and other relevant parts in the embodiments related to FIG. 2A, which are not repeated here.

In step S4105, an expected time for the terminal to perform a signal measurement is determined.

For optional implementations of step S4105, reference may be made to the optional implementations of step S2105 in FIG. 2A and other relevant parts in the embodiments related to FIG. 2A, which are not repeated here.

In step S4106, measurement configuration information is sent.

For optional implementations of step S4106, reference may be made to the optional implementations of step S2106 in FIG. 2A and other relevant parts in the embodiments related to FIG. 2A, which are not repeated here.

In some embodiments, the network device may send the measurement configuration information to a terminal, but is not limited thereto; the network device may also send the measurement configuration information to another entity.

In step S4107, a measurement report is obtained.

For optional implementations of step S4107, reference may be made to the optional implementations of step S2110 in FIG. 2A and other relevant parts in the embodiments related to FIG. 2A, which are not repeated here.

In some embodiments, the network device may receive the measurement report sent by a terminal, but is not limited thereto; the network device may also receive the measurement report sent by another entity.

The method according to an embodiment of the disclosure may include at least one of the foregoing steps S4101 to S4107. For example, step S4104 may be implemented as an independent embodiment, steps S4104 + S4105 may be implemented as an independent embodiment, steps S4103 + S4104 may be implemented as an independent embodiment, steps S4103 + S4104 + S4105 may be implemented as an independent embodiment, steps S4103 + S4104 + S4105 + S4106 may be implemented as an independent embodiment, steps S4103 + S4104 + S4105 + S4106 + S4107 may be implemented as an independent embodiment, steps S4101 + S4102 + S4103 + S4104 may be implemented as an independent embodiment, steps S4101 + S4102 + S4103 + S4104 + S4105 may be implemented as an independent embodiment, and steps S4101 + S4102 + S4103 + S4104 + S4105 + S4106 may be implemented as an independent embodiment, but are not limited thereto.

In some embodiments, the foregoing steps S4101 to S4107 may all be performed in a different order or simultaneously.

In some embodiments, the foregoing steps S4101 to S4107 are all optional steps.

FIG. 4B is a schematic flowchart of a measurement method according to an embodiment of the disclosure. As shown in FIG. 4B, an embodiment of the disclosure relates to a measurement method, which may be performed by a network device. The method may include the following step.

In step S4201, a first parameter is determined.

For optional implementations of step S4201, reference may be made to the optional implementations of step S2103 in FIG. 2A, step S4103 in FIG. 4A, and other relevant parts in the embodiments related to FIG. 2A and FIG. 4A, which are not repeated here.

In step S4202, a first measurement period is determined.

For optional implementations of step S4202, reference may be made to the optional implementations of step S2104 in FIG. 2A, step S4104 in FIG. 4A, and other relevant parts in the embodiments related to FIG. 2A and FIG. 4A, which are not repeated here.

In step S4203, an expected time for the terminal to perform a signal measurement is determined.

For optional implementations of step S4203, reference may be made to the optional implementations of step S2105 in FIG. 2A, step S4105 in FIG. 4A, and other relevant parts in the embodiments related to FIG. 2A and FIG. 4A, which are not repeated here.

In some embodiments, the foregoing steps are all optional steps.

In some embodiments, the embodiment shown in FIG. 4B may also be combined with any one or more steps in the embodiment shown in FIG. 4A to form a new embodiment.

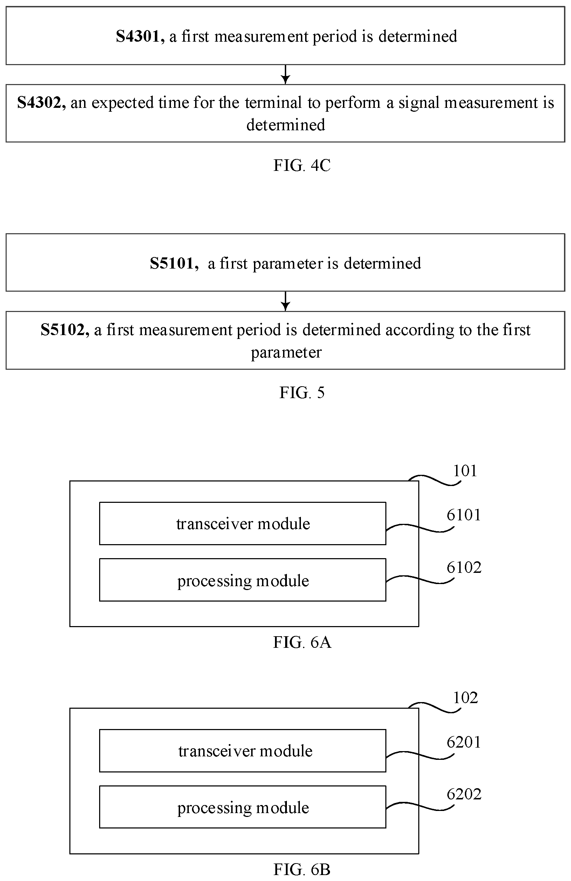

FIG. 4C is a schematic flowchart of a measurement method according to an embodiment of the disclosure. As shown in FIG. 4C, an embodiment of the disclosure relates to a measurement method, which may be performed by a network device. The method may include the following step.

In step S4301, a first measurement period is determined.

For optional implementations of step S4301, reference may be made to the optional implementations of step S2103 in FIG. 2A, step S4103 in FIG. 4A, and other relevant parts in the embodiments related to FIG. 2A and FIG. 4A, which are not repeated here.

In step S4302, an expected time for the terminal to perform a signal measurement is determined.

In some embodiments, the expected time for the terminal to perform signal measurement may be determined according to the first measurement period.

For optional implementations of step S4302, reference may be made to the optional implementations of step S2104 in FIG. 2A, step S4104 in FIG. 4A, and other relevant parts in the embodiments related to FIG. 2A and FIG. 4A, which are not repeated here.

In some embodiments, the foregoing steps are all optional steps.

In some embodiments, the embodiment shown in FIG. 4C may also be combined with any one or more steps in the embodiment shown in FIG. 4A to form a new embodiment.

In some embodiments, the first measurement period is a period for a terminal to perform a measurement on a neighbor cell in a case where a first condition is satisfied, the first condition is configured to determine that the terminal is capable of performing a signal measurement on the neighbor cell and a serving cell respectively based on different FFT processors, and the first parameter is a measurement period scaling factor corresponding to the neighbor cell.

In some embodiments, the first condition includes at least one of the following:
that the terminal supports a first capability, in which the first capability is a capability that the terminal supports that an RTD of a plurality of target cells is greater than a CP, and the plurality of target cells comprise the neighbor cell and/or the serving cell of the terminal;
that the terminal is provided with a first processor, in which the first processor is an FFT processor capable of measuring the neighbor cell; or
that a time difference of signals received by the terminal from a plurality of target cells can be greater than the CP.

In some embodiments, the method further includes:
determining the first parameter according to first information, in which the first information is information related to the neighbor cell of the terminal.

In some embodiments, the first information includes at least one of the following:
TCI information, in which the TCI information is configured to determine whether any neighbor cell is present on an active TCI state list;
a first number, in which the first number is a number of neighbor cells;
a second number, in which the second number is a number of first-type neighbor cells, and a first-type neighbor cell is a neighbor cell present on the active TCI state list;
a third number, in which the third number is a number of second-type neighbor cells, a second-type neighbor cell is a neighbor cell not present on the active TCI state list, and a sum of the third number and the second number is less than or equal to the first number;
a fourth number, in which the fourth number is a number of first processors, and a first processor is an FFT processor capable of measuring the neighbor cell;
a fifth number, in which the fifth number is a number of first processors allocated for use by the first-type neighbor cell; or
a sixth number, in which the sixth number is a number of first processors allocated for use by the second-type neighbor cell, and a sum of the fifth number and the sixth number is less than or equal to the fourth number.

In some embodiments, determining the first parameter according to the first information includes:
determining that the first number is less than or equal to the fourth number; and
determining the first parameter as P11, in which the P11 is a preset positive integer.

In some embodiments, determining the first parameter according to the first information includes:
determining that the first number is greater than the fourth number; and
determining the first parameter according to the TCI information, the fourth number and third information, in which the third information includes at least one of: the first number, the second number, the third number, the fifth number, or the sixth number.

In some embodiments, determining the first parameter according to the TCI information, the fourth number and the third information includes:
determining, according to the TCI information, that one or more neighbor cells of the terminal are present on the active TCI state list;
allocating one or more first processors for use by one or more first-type neighbor cells; and
determining, according to the second number and the fourth number, the first parameter corresponding to the first-type neighbor cell.

In some embodiments, determining, according to the second number and the fourth number, the first parameter corresponding to the first-type neighbor cell includes any one of:
determining the first parameter corresponding to the first-type neighbor cell as P21, in which the P21 is a value obtained by rounding up a quotient of the second number divided by the fourth number;
in a case where the fourth number is equal to N1, determining the first parameter as the second number, in which the N1 is a preset positive integer;
in a case where the fourth number is greater than or equal to the N1, and the second number is greater than or equal to the fourth number, determining the first parameter as the P21;
in a case where the second number is less than or equal to the fourth number, determining the first parameter as P22, in which the P22 is a preset positive integer.

In some embodiments, determining the first parameter according to the TCI information, the fourth number and the third information includes:
in a case where the fourth number is equal to N1, and it is determined according to the TCI information that one or more neighbor cells of the terminal are present on the active TCI state list, performing the signal measurement on one or more first-type neighbor cells and one or more second-type neighbor cells by using the fourth number of first processors;
determining the first parameter corresponding to the first-type neighbor cell as a product of the second number and a first value, in which the first value is a positive integer greater than or equal to 2; and
determining the first parameter corresponding to the second-type neighbor cell as a product of the third number and the first value.

In some embodiments, determining the first parameter according to the TCI information, the fourth number and the third information includes:
in a case where the fourth number is greater than N1, and it is determined according to the TCI information that one or more neighbor cells of the terminal are present on the active TCI state list, allocating the fifth number of first processors for use by one or more first-type neighbor cells, and allocating the sixth number of first processors for use by one or more second-type neighbor cells;
determining the first parameter corresponding to the first-type neighbor cell according to the second number and the fifth number, in which the fifth number is less than or equal to the second number; and
determining the first parameter corresponding to the second-type neighbor cell according to the third number and the sixth number, in which the sixth number is less than or equal to the third number.

In some embodiments, determining the first parameter corresponding to the first-type neighbor cell according to the second number and the fifth number includes any one of:
determining the first parameter corresponding to the first-type neighbor cell as P32, in which the P32 is a value obtained by rounding up a quotient of the second number divided by the fifth number;
in a case where the fifth number is equal to N1, determining the first parameter corresponding to the first-type neighbor cell as the second number;
in a case where the fifth number is equal to the second number, determining the first parameter corresponding to the first-type neighbor cell as P31, in which the P31 is a positive integer;
in a case where the fifth number is greater than the N1 and less than the second number, determining the first parameter corresponding to the first-type neighbor cell as the P32.

In some embodiments, determining the first parameter corresponding to the second-type neighbor cell according to the third number and the sixth number includes any one of:
determining the first parameter corresponding to the second-type neighbor cell as P42, in which the P42 is a value obtained by rounding up a quotient of the third number divided by the sixth number;
in a case where the sixth number is equal to N1, determining the first parameter corresponding to the second-type neighbor cell as the third number;
in a case where the sixth number is equal to the third number, determining the first parameter corresponding to the second-type neighbor cell as P41, in which the P41 is a positive integer;
in a case where the sixth number is greater than the N1 and less than the third number, determining the first parameter corresponding to the second-type neighbor cell as the P42.

In some embodiments, determining the first parameter according to the TCI information, the fourth number and the third information includes:
determining, according to the TCI information, that no neighbor cell of the terminal is present on the active TCI state list;
allocating one or more first processors for use by one or more second-type neighbor cells; and
determining, according to the third number and the fourth number, the first parameter corresponding to the second-type neighbor cell.

In some embodiments, determining, according to the third number and the fourth number, the first parameter corresponding to the second-type neighbor cell includes any one of:
determining the first parameter corresponding to the second-type neighbor cell as P51, in which the P51 is a value obtained by rounding up a quotient of the third number divided by the fourth number;
in a case where the fourth number is equal to N1, determining the first parameter as the third number;
in a case where the fourth number is greater than or equal to the N1, determining the first parameter as the P51;
in a case where the fourth number is greater than or equal to the N1, determining the first parameter as P52, in which the P52 is a number of frequency layers expected to be measured by the terminal.

In some embodiments, determining the first parameter according to the first information includes any one of:
determining the first parameter as P61, in which the P61 is a value obtained by rounding up a quotient of the first number divided by the fourth number;
in a case where the first number is greater than the fourth number, and the fourth number is equal to N1, determining the first parameter as the first number;
in a case where the first number is greater than the fourth number, and the fourth number is greater than or equal to the N1, determining the first parameter as the P61;
in a case where the first number is greater than the fourth number, and the fourth number is greater than or equal to the N1, determining the first parameter as P62, in which the P62 is a number of frequency layers expected to be measured by the terminal.

In some embodiments, determining the first measurement period according to the first parameter includes:
determining the first measurement period according to the first parameter and second information,
in which the second information includes at least one of:
   whether the terminal is configured with DR;
   a DRX cycle of the terminal;
   a measurement report period of the terminal;
   a period TSSB_NBC of an SSB index of the neighbor cell of the terminal;
   a third parameter M, in which the third parameter M is a parameter determined according to an upper layer configuration;
   a fourth parameter P, in which the fourth parameter P is a parameter determined according to a GAP configured for the terminal and a slot occasion of an SSB; or
   a fifth parameter K, in which the fifth parameter K is a preset parameter.

In some embodiments, the neighbor cell is a neighbor cell expected to be measured by the terminal, and one or more neighbor cells expected to be measured are a subset or a full set of one or more neighbor cells configured by a network device for the terminal.

In some embodiments, the signal measurement is a measurement for an LTM.

FIG. 5 is a schematic flowchart of a measurement method according to an embodiment of the disclosure. As shown in FIG. 5, an embodiment of the disclosure relates to a measurement method, which may be performed by a terminal and/or a network device in a communication system. The method may include the following steps.

In step S5101, a first parameter is determined.

In some embodiments, the first parameter may be a measurement period scaling factor corresponding to a neighbor cell. In some embodiments, the first parameter may also be referred to as a "scaling factor", "measurement period scaling factor", "L1-RSRP measurement period scaling factor", or "P_{FFT}".

**In** some embodiments, the first parameter (P_{FFT}) may be determined according to first information, and the first information may include at least one of:
TCI information, in which the TCI information is configured to determine whether any neighbor cell is present on an active TCI state list;
a first number, in which the first number is a number of neighbor cells;
a second number, in which the second number is a number of first-type neighbor cells, and a first-type neighbor cell is a neighbor cell present on the active TCI state list;
a third number, in which the third number is a number of second-type neighbor cells, and a second-type neighbor cell is a neighbor cell not present on the active TCI state list;
a fourth number, in which the fourth number is a number of first processors, and a first processor is an FFT processor capable of measuring the neighbor cell;
a fifth number, in which the fifth number is a number of first processors allocated for use by the first-type neighbor cell; or
a sixth number, in which the sixth number is a number of first processors allocated for use by the second-type neighbor cell.

In some embodiments, the terminal may have two types of neighbor cells, where a first-type neighbor cell is a cell present on the activated TCI state list, and the second-type neighbor cell is a cell not present on the activated TCI state list. In some embodiments, the terminal may also have no such first-type neighbor cells, for example, the second number is equal to 0. In some embodiments, the terminal may have only second-type neighbor cells, for example, the second number is 0; the terminal may also have only first-type neighbor cells, for example, the third number is 0.

In some embodiments, the first parameter (P_{FFT}) may be determined by distinguishing different scenarios.

Scenario 1: The number of neighbor cells (the first number) is one.

In some embodiments, the first processor may be allocated for use by the single neighbor cell.

In some embodiments, the terminal may have two FFT processors, one of which is a first processor (i.e., an FFT processor configured to perform the measurement on a neighbor cell), and the other is a second processor (i.e., an FFT processor configured to perform the measurement on a serving cell).

For example, when at least one symbol of an SSB from a target cell (including a serving cell and/or a neighbor cell(s)) is overlapped or adjacent in the time domain, if the number of neighbor cells to be measured by the terminal is 1, the first parameter (P_{FFT}) may be equal to 2.

Scenario 2: The number of neighbor cells (the first number) is greater than 1.

This scenario 2 may be further divided into two sub-scenarios based on the number of first processors (the fourth number) of the terminal:

Sub-scenario 1: The number of first processors (the fourth number) of the terminal is 1, and the number of neighbor cells is greater than 1.

In some embodiments, when the terminal has two FFT processors, the serving cell exclusively uses one FFT processor (the second processor), and the other FFT processor (the first processor) is shared by a plurality of neighbor cells.

In some embodiments, the terminal may have two types of neighbor cells: the first-type neighbor cell on the activated TCI state list, and the second-type neighbor cell not on the activated TCI state list.

The use/allocation of the first processor and the determination of the first parameter under this sub-scenario 1 may adopt any of the following implementations:
Optional implementation 1: Allocate the first processor to the first-type neighbor cell(s) preferentially.

In some embodiments, in a case where the number of neighbor cells to be measured is greater than 1 and the number of first-type neighbor cells is greater than or equal to 1 (e.g., the active TCI state list is configured), the first-type neighbor cells may share one FFT processor, and the first parameter (P_{FFT}) corresponding to the first-type neighbor cell may be equal to the fifth quantity (the number of first-type neighbor cells).

For example, P_{FFT} = NcellList (NcellList ≥ 1), where P_{FFT} represents the first parameter corresponding to the first-type neighbor cell, and NcellList represents the second number (the number of first-type neighbor cells).

In some embodiments, for the second-type neighbor cell(s) (the neighbor cell(s) not on the TCI state list), the terminal may skip the measurement of these neighbor cells.

In some embodiments, if the second number is equal to 0 (for example, if the terminal is not configured with the activated TCI state list, or none of the neighbor cells are on the activated TCI state list), all neighbor cells may share one FFT processor.

For example, P_{FFT} = N_{NeighborCell} (N_{NeighborCell} ≥ 1), where N_{NeighborCell} is the number of neighbor cells to be measured (such as intra-frequency neighbor cells corresponding to the serving cell). The terminal may select all or part of the neighbor cells to be measured.

Optional implementation 2: First-type neighbor cell(s) and second-type neighbor cell(s) share the first processor.

For example, when the number of neighbor cells to be measured is greater than 1 and the terminal is configured with the activated TCI state list, the first-type neighbor cell(s) and the second-type neighbor cell(s) may share the first processor.

In some embodiments, the first parameter (P_{FFT}) corresponding to the first-type neighbor cell may be equal to 2 × NcellList (NcellList ≥ 1), where NcellList represents the second number (the number of first-type neighbor cells).

In some embodiments, the first parameter (P_{FFT}) corresponding to the second-type neighbor cell may be equal to 2 × N_{NeighborCell} (N_{NeighborCell} ≥ 1), where N_{NeighborCell} represents the third number (the number of second-type neighbor cells). The terminal may select all or part of the neighbor cells to be measured.

Optional implementation 3: All neighbor cells share the first processor.

For example, without distinguishing between first-type neighbor cells and second-type neighbor cells, all neighbor cells to be measured may share the first processor.

In some embodiments, when the number of neighbor cells to be measured is greater than 1, the first parameter (P_{FFT}) may be equal to N_{N_Cell} (N_{N_Cell} ≥ 1), where N_{N_Cell} represents the number of neighbor cells to be measured. The terminal may select all or part of the neighbor cells to be measured.

Sub-scenario 2: The number of first processors (the fourth number) is greater than 1, and the number of neighbor cells is greater than 1.

In some embodiments, when the terminal has three or more FFT processors, the serving cell may exclusively use one FFT processor (defined as the second processor). The other FFT processors (defined as the first processors) may be shared by a plurality of neighbor cells.

In some embodiments, the use or allocation of the first processors and the determination of the first parameter under this sub-scenario 2 may include any one of the following optional implementations:
Optional implementation 4: Allocate the first processors to the first-type neighbor cells and the second-type neighbor cells separately.

For example, when the terminal has two types of neighbor cells and is equipped with a fourth number (N_{FFT4}) of first processors, a fifth number (N_{FFT5}) of the first processors may be allocated for use by the first-type neighbor cells, and the remaining sixth number (N_{FFT6}) of first processors may be shared by the second-type neighbor cells, where N_{FFT5} + N_{FFT6} ≤ N_{FFT4}.

In some embodiments, if the fifth number (N_{FFT5}) is equal to 1, the first parameter (P_{FFT}) corresponding to the first-type neighbor cell may be equal to NcellList (NcellList ≥ 1), where NcellList represents the second number (the number of first-type neighbor cells).

In some embodiments, if the fifth number (N_{FFT5}) is greater than or equal to the second number, the first parameter (P_{FFT}) corresponding to the first-type neighbor cell may be equal to 1.

In some embodiments, if the fifth number (N_{FFT5}) is greater than or equal to 1, the first parameter (P_{FFT}) corresponding to the first-type neighbor cell may be equal to ceil(NcellList/N_{FFT5}), where NcellList represents the second number (the number of first-type neighbor cells) and N_{FFT5} represents the fifth number.

In some embodiments, if the sixth number (N_{FFT6}) is equal to 1, the first parameter (P_{FFT}) corresponding to the second-type neighbor cell may be equal to N_{NeighborCell} (N_{NeighborCell} ≥ 1), where N_{NeighborCell} represents the third number (the number of second-type neighbor cells).

In some embodiments, if the sixth number (N_{FFT6}) is greater than or equal to the third number, the first parameter (P_{FFT}) corresponding to the second-type neighbor cell may be equal to 1.

In some embodiments, if the sixth number (N_{FFT6}) is greater than or equal to 1, the first parameter (P_{FFT}) corresponding to the second-type neighbor cell may be equal to ceil(N_{NeighborCell}/N_{FFT6}), where N_{NeighborCell} represents the third number (the number of second-type neighbor cells) and N_{FFT6} represents the sixth number.

Optional implementation 5: All neighbor cells share all first processors.

In some embodiments, when the number of neighbor cells to be measured is greater than 1, all neighbor cells may share the first processors.

In some embodiments, the first parameter (P_{FFT}) may be equal to ceil(N_{N_Cell}/N_{FFT4}), where N_{N_Cell} represents the number of neighbor cells to be measured (the terminal may select all or part of the neighbor cells to be measured), N_{FFT4} represents the fourth number (the number of first processors), and ceil represents a mathematical ceiling operation.

In some embodiments, the first parameter (P_{FFT}) may be equal to N_{layer}, where N_{layer} represents the number of frequency layers that the terminal expects to measure.

In step S5102, a first measurement period may be determined based on a first parameter.

In some embodiments, the first measurement period may be determined according to the first parameter and second information.

In some embodiments, for optional implementations of determining the first measurement period based on the first parameter and the second information, reference may be made to the descriptions in the foregoing embodiments, which are not repeated here.

In some embodiments, the first measurement period may be determined according to the first parameter and the second information. For the second information and an optional implementation of determining the first measurement period according to the first parameter and the second information, reference may be made to the description in the foregoing embodiments of the present disclosure, which is not repeated here.

In some embodiments, step S5101 and/or step S5102 may be performed when the first condition is satisfied, and details of the first condition are described in the foregoing embodiments.

Some embodiments of the disclosure provide a communication system including a terminal and a network device, where the terminal executes the measurement method performed by the terminal in the foregoing embodiments, and the network device executes the measurement method performed by the network device.

Embodiments of the disclosure further provide an apparatus for implementing any one of the above methods. For example, an apparatus is provided, where the apparatus includes units or modules for implementing the steps performed by a terminal in any one of the above methods. For another example, another apparatus is further provided, including units or modules for implementing the steps performed by a network device (such as an access network device, a core network function node, a core network device, etc.) in any one of the above methods.

It should be understood that the division of each unit or module in the above apparatus is only a division of logical functions, which may be fully or partially integrated into a physical entity or physically separated in actual implementation. Moreover, the units or modules in the apparatus may be implemented in the form of calling software by a processor: for example, the apparatus includes a processor, which is connected with a memory, and instructions are stored in the memory, and the processor calls the instructions stored in the memory to implement any of the above methods or implement the functions of the units or modules of the apparatus, in which the processor is a general-purpose processor, such as a central processing unit (CPU) or a microprocessor, and the memory is a memory in the apparatus or a memory outside the apparatus. Alternatively, the units or modules in the apparatus may be implemented in the form of hardware circuits, and some or all of the functions of the units or modules may be implemented by designing the hardware circuits, which may be understood as one or more processors; for example, in an implementation, the above-mentioned hardware circuit is an application-specific integrated circuit (ASIC), and some or all of the functions of the above-mentioned units or modules are implemented by designing the logical relationship of elements in the circuit; for another example, in another implementation, the above hardware circuit may be implemented by a programmable logic device (PLD). Take a field programmable gate array (FPGA) as an example, it may include a large number of logic gates, and the connection relationship between the logic gates is configured by configuration files, implementing the functions of some or all of the above units or modules. All the units or modules of the above apparatus may be implemented entirely in the form of calling software by the processor, or entirely in the form of hardware circuits, or partially in the form of calling software by a processor, and the rest is implemented in the form of hardware circuits.

In embodiments of the disclosure, the processor is a circuit with signal processing capability. In an implementation, the processor may be a circuit with instruction reading and running capability, such as a CPU, a microprocessor, a graphics processing unit (GPU) (which may be understood as a microprocessor), or a digital signal processor (DSP). In another implementation, the processor may realize certain functions through the logical relationship of hardware circuits, which are fixed or reconfigurable. For example, the processor is a hardware circuit implemented by an ASIC or a PLD, such as an FPGA. In the reconfigurable hardware circuit, the process that the processor loads the configuration document to implement the hardware circuit configuration may be understood as the process that the processor loads instructions to implement the functions of some or all of the above units or modules. Furthermore, it may also be a hardware circuit designed for artificial intelligence, which may be understood as the ASIC, such as neural network processing unit (NPU), tensor processing unit (TPU), deep learning processing unit (DPU) and so on.

FIG. 6A is a schematic structural diagram of a terminal proposed in an embodiment of the disclosure. As shown in FIG. 6A, the terminal 101 may include at least one of a transceiver module 6101, a processing module 6102, and the like. In some embodiments, the processing module 6102 is configured to determine a first measurement period according to a first parameter, where the first measurement period is a period for the terminal to measure neighbor cells when a first condition is satisfied, the first condition is used to determine that the terminal can perform signal measurement on neighbor cells and a serving cell respectively based on different Fast Fourier Transform (FFT) processors, and the first parameter is a measurement period scaling factor corresponding to the neighbor cells; and perform signal measurement on the neighbor cells according to the first measurement period. In some embodiments, the transceiver module 6101 may be configured to perform at least one of communication steps such as sending and/or receiving performed by the terminal 101 in any of the above methods (for example, step S2101, step S2102, step S2106, step S2110, but not limited thereto), and details are not described herein again. In some embodiments, the processing module 6102 may be configured to perform at least one of other steps performed by the terminal 101 in any of the above methods (for example, step S2103, step S2104, step S2105, step S2107, step S2108, step S2109, but not limited thereto), and details are not described herein again.

FIG. 6B is a schematic structural diagram of a network device proposed in an embodiment of the disclosure. As shown in FIG. 6B, the network device 102 may include at least one of a transceiver module 6201, a processing module 6202, and the like. In some embodiments, the processing module 6202 is configured to determine a first measurement period according to a first parameter, where the first measurement period is a period for the terminal to measure neighbor cells when a first condition is satisfied, the first condition is used to determine that the terminal can perform signal measurement on neighbor cells and a serving cell respectively based on different Fast Fourier Transform (FFT) processors, and the first parameter is a measurement period scaling factor corresponding to the neighbor cells; and determine an expected time for the terminal to perform signal measurement according to the first measurement period. In some embodiments, the transceiver module 6201 may be configured to perform at least one of communication steps such as sending and/or receiving performed by the network device 102 in any of the above methods (for example, step S2101, step S2102, step S2106, step S2110, but not limited thereto), and details are not described herein again. In some embodiments, the processing module 6202 may be configured to perform at least one of other steps performed by the network device 102 in any of the above methods (for example, step S2103, step S2104, step S2105, step S2107, step S2108, step S2109, but not limited thereto), and details are not described herein again.

In some embodiments, a transceiver module may include a transmitting module and/or a receiving module, and the transmitting module and the receiving module may be separate or integrated together. In some embodiments, a transceiver module may be replaced with a transceiver.

In some embodiments, a processing module may be a single module or may include a plurality of sub-modules. In some embodiments, the plurality of sub-modules respectively perform all or part of the steps required to be performed by the processing module. In some embodiments, a processing module may be replaced with a processor.

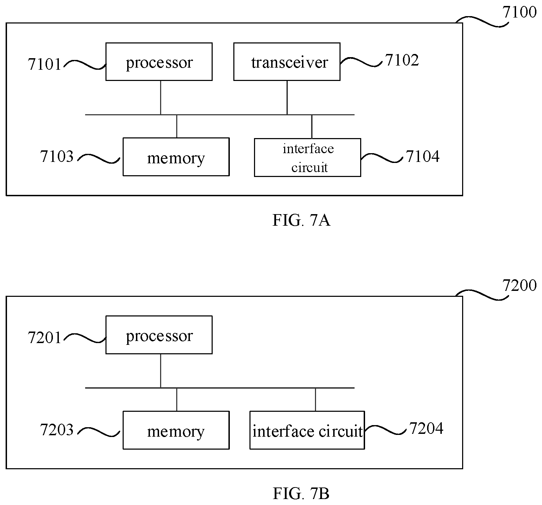

FIG. 7A is a schematic structural diagram of a communication device 7100 proposed in an embodiment of the disclosure. The communication device 7100 may be a network device (such as an access network device, a core network device, etc.), a terminal (such as a user equipment, etc.), a chip, a chip system, or a processor that supports a network device in implementing any of the above methods, or a chip, a chip system, or a processor that supports a terminal in implementing any of the above methods. The communication device 7100 may be configured to implement the methods described in the foregoing method embodiments, and reference may be made to the descriptions in the foregoing method embodiments for details.

As shown in FIG. 7A, the communication device 7100 includes one or more processors 7101. The processor 7101 may be a general-purpose processor, a dedicated processor, or the like, for example, a baseband processor or a central processing unit. A baseband processor may be configured to process communication protocols and communication data, and a central processing unit may be configured to control a communication apparatus (such as a base station, a baseband chip, a terminal, a terminal chip, a DU, a CU, etc.), execute programs, and process program data. In some embodiments, the communication device 7100 may be configured to perform any of the above methods. In some embodiments, the one or more processors 7101 are configured to invoke instructions to cause the communication device 7100 to perform any of the above methods.

In some embodiments, the communication device 7100 may further include one or more transceivers 7102. When the communication device 7100 includes one or more transceivers 7102, the transceiver 7102 may perform at least one of communication steps such as sending and/or receiving in the above methods (for example, step S2101, step S2102, step S2106, step S2110, but not limited thereto), and the processor 7101 may perform at least one of other steps (for example, step S2103, step S2104, step S2105, step S2107, step S2108, step S2109, but not limited thereto).

In some embodiments, a transceiver may include a receiver and/or a transmitter, and the receiver and the transmitter may be separate or integrated together. In some embodiments, terms such as transceiver, transceiver unit, transceiver machine, transceiver circuit, interface circuit, and interface may be replaced with each other; terms such as transmitter, transmitting unit, transmitting machine, and transmitting circuit may be replaced with each other; and terms such as receiver, receiving unit, receiving machine, and receiving circuit may be replaced with each other.

In some embodiments, the communication device 7100 further includes one or more memories 7103 for storing data. In some embodiments, all or part of the memory 7103 may also be located outside the communication device 7100. In an optional embodiment, the communication device 7100 may include one or more interface circuits 7104. In some embodiments, the interface circuit 7104 is connected to the memory 7103, and the interface circuit 7104 may be configured to receive data from the memory 7103 or other devices and send data to the memory 7103 or other devices. For example, the interface circuit 7104 may read data stored in the memory 7103 and send the data to the processor 7101.

The communication device 7100 described in the above embodiments may be a network device or a terminal, but the scope of the communication device 7100 described in the disclosure is not limited thereto, and the structure of the communication device 7100 may not be limited by FIG. 7A. The communication device may be a stand-alone device or a part of a larger device. For example, the communication device may be: (1) a stand-alone integrated circuit (IC), or a chip, or a chip system or subsystem; (2) a set having one or more ICs, and optionally, the above IC set may further include a storage component for storing data and programs; (3) an ASIC, such as a modem; (4) a module that can be embedded in other devices; (5) a receiver, a terminal, an intelligent terminal, a cellular phone, a wireless device, a handset, a mobile unit, a vehicle-mounted device, a network device, a cloud device, an artificial intelligence device, etc.; (6) others.

FIG. 7B is a schematic structural diagram of a chip 7200 proposed in an embodiment of the disclosure. For the case where the communication device 7100 may be a chip or a chip system, reference may be made to the schematic structural diagram of the chip 7200 shown in FIG. 7B, but is not limited thereto.

The chip 7200 includes one or more processors 7201, and the chip 7200 is configured to perform any of the above methods.

In some embodiments, the chip 7200 further includes one or more interface circuits 7204. In some embodiments, terms such as interface circuit, interface, and transceiver pin may be replaced with each other. In some embodiments, the chip 7200 further includes one or more memories 7203 for storing data. In some embodiments, all or part of the memory 7203 may be located outside the chip 7200.

In some embodiments, the interface circuit 7204 is connected to the memory 7203. The interface circuit 7204 may be configured to receive data from the memory 7203 or other devices, and the interface circuit 7204 may be configured to send data to the memory 7203 or other devices. For example, the interface circuit 7204 may read data stored in the memory 7203 and send the data to the processor 7201.

In some embodiments, the interface circuit 7204 performs at least one of communication steps such as sending and/or receiving in the above methods (for example, step S2101, step S2102, step S2106, step S2110, but not limited thereto). The performance of communication steps such as sending and/or receiving in the above methods by the interface circuit 7204 means, for example: the interface circuit 7204 performs data interaction between the processor 7201, the chip 7200, the memory 7203, or a transceiver device. In some embodiments, the processor 7201 may perform at least one of other steps (for example, step S2103, step S2104, step S2105, step S2107, step S2108, step S2109, but not limited thereto).

The modules and/or devices described in the embodiments of virtual apparatuses, physical apparatuses, chips, and the like may be arbitrarily combined or separated according to circumstances. In some embodiments, part or all of the steps may also be cooperatively performed by a plurality of modules and/or devices, which is not limited herein.

An embodiment of the disclosure further provides a storage medium having instructions stored thereon, which, when run on the communication device 7100, cause the communication device 7100 to perform any of the above methods. In some embodiments, the storage medium is an electronic storage medium. In some embodiments, the storage medium is a computer-readable storage medium, but is not limited thereto, and may also be a storage medium readable by other devices. In some embodiments, the storage medium may be a non-transitory storage medium, but is not limited thereto, and may also be a transitory storage medium.

An embodiment of the disclosure further provides a program product which, when executed by the communication device 7100, causes the communication device 7100 to perform any of the above methods. In some embodiments, the program product may be a computer program product.

An embodiment of the disclosure further provides a computer program which, when run on a computer, causes the computer to perform any of the above methods.

## Claims

1. A measurement method, comprising:
determining a first measurement period according to a first parameter, wherein the first measurement period is a period for a terminal to perform a measurement on a neighbor cell in a case where a first condition is satisfied, the first condition is configured to determine that the terminal is capable of performing a signal measurement on the neighbor cell and a serving cell respectively based on different fast Fourier transform (FFT) processors, and the first parameter is a measurement period scaling factor corresponding to the neighbor cell; and
performing the signal measurement on the neighbor cell according to the first measurement period.

2. The measurement method according to claim 1, wherein the first condition comprises at least one of the following:
that the terminal supports a first capability, wherein the first capability is a capability that the terminal supports that a receiving time difference (RTD) of a plurality of target cells is greater than a cyclic prefix (CP), and the plurality of target cells comprise the neighbor cell and/or the serving cell of the terminal;
that the terminal is provided with a first processor, wherein the first processor is an FFT processor capable of measuring the neighbor cell; or
that a time difference of signals received by the terminal from a plurality of target cells can be greater than the CP.

3. The measurement method according to claim 1 or 2, further comprising:
determining the first parameter according to first information, wherein the first information is information related to the neighbor cell of the terminal.

4. The measurement method according to claim 3, wherein the first information comprises at least one of:
transmission configuration indicator (TCI) information, wherein the TCI information is configured to determine whether any neighbor cell is present on an active TCI state list;
a first number, wherein the first number is a number of neighbor cells;
a second number, wherein the second number is a number of first-type neighbor cells, and a first-type neighbor cell is a neighbor cell present on the active TCI state list;
a third number, wherein the third number is a number of second-type neighbor cells, a second-type neighbor cell is a neighbor cell not present on the active TCI state list, and a sum of the third number and the second number is less than or equal to the first number;
a fourth number, wherein the fourth number is a number of first processors, and a first processor is an FFT processor capable of measuring the neighbor cell;
a fifth number, wherein the fifth number is a number of first processors allocated for use by the first-type neighbor cell; or
a sixth number, wherein the sixth number is a number of first processors allocated for use by the second-type neighbor cell, and a sum of the fifth number and the sixth number is less than or equal to the fourth number.

5. The measurement method according to claim 4, wherein determining the first parameter according to the first information comprises:
determining that the first number is less than or equal to the fourth number; and
determining the first parameter as P11, wherein the P11 is a preset positive integer.

6. The measurement method according to claim 4, wherein determining the first parameter according to the first information comprises:
determining that the first number is greater than the fourth number; and
determining the first parameter according to the TCI information, the fourth number and third information, wherein the third information comprises at least one of: the first number, the second number, the third number, the fifth number, or the sixth number.

7. The measurement method according to claim 6, wherein determining the first parameter according to the TCI information, the fourth number and the third information comprises:
determining, according to the TCI information, that one or more neighbor cells of the terminal are present on the active TCI state list;
allocating one or more first processors for use by one or more first-type neighbor cells; and
determining, according to the second number and the fourth number, the first parameter corresponding to the first-type neighbor cell.

8. The measurement method according to claim 7, wherein determining, according to the second number and the fourth number, the first parameter corresponding to the first-type neighbor cell comprises any one of:
determining the first parameter corresponding to the first-type neighbor cell as P21, wherein the P21 is a value obtained by rounding up a quotient of the second number divided by the fourth number;
in a case where the fourth number is equal to N1, determining the first parameter as the second number, wherein the N1 is a preset positive integer;
in a case where the fourth number is greater than or equal to the N1, and the second number is greater than or equal to the fourth number, determining the first parameter as the P21;
in a case where the second number is less than or equal to the fourth number, determining the first parameter as P22, wherein the P22 is a preset positive integer.

9. The measurement method according to claim 6, wherein determining the first parameter according to the TCI information, the fourth number and the third information comprises:
in a case where the fourth number is equal to N1, and it is determined according to the TCI information that one or more neighbor cells of the terminal are present on the active TCI state list, performing the signal measurement on one or more first-type neighbor cells and one or more second-type neighbor cells by using the fourth number of first processors;
determining the first parameter corresponding to the first-type neighbor cell as a product of the second number and a first value, wherein the first value is a positive integer greater than or equal to 2; and
determining the first parameter corresponding to the second-type neighbor cell as a product of the third number and the first value.

10. The measurement method according to claim 6, wherein determining the first parameter according to the TCI information, the fourth number and the third information comprises:
in a case where the fourth number is greater than N1, and it is determined according to the TCI information that one or more neighbor cells of the terminal are present on the active TCI state list, allocating the fifth number of first processors for use by one or more first-type neighbor cells, and allocating the sixth number of first processors for use by one or more second-type neighbor cells;
determining the first parameter corresponding to the first-type neighbor cell according to the second number and the fifth number, wherein the fifth number is less than or equal to the second number; and
determining the first parameter corresponding to the second-type neighbor cell according to the third number and the sixth number, wherein the sixth number is less than or equal to the third number.

11. The measurement method according to claim 10, wherein determining the first parameter corresponding to the first-type neighbor cell according to the second number and the fifth number comprises any one of:
determining the first parameter corresponding to the first-type neighbor cell as P32, wherein the P32 is a value obtained by rounding up a quotient of the second number divided by the fifth number;
in a case where the fifth number is equal to N1, determining the first parameter corresponding to the first-type neighbor cell as the second number;
in a case where the fifth number is equal to the second number, determining the first parameter corresponding to the first-type neighbor cell as P31, wherein the P31 is a positive integer;
in a case where the fifth number is greater than the N1 and less than the second number, determining the first parameter corresponding to the first-type neighbor cell as the P32.

12. The measurement method according to claim 10, wherein determining the first parameter corresponding to the second-type neighbor cell according to the third number and the sixth number comprises any one of:
determining the first parameter corresponding to the second-type neighbor cell as P42, wherein the P42 is a value obtained by rounding up a quotient of the third number divided by the sixth number;
in a case where the sixth number is equal to N1, determining the first parameter corresponding to the second-type neighbor cell as the third number;
in a case where the sixth number is equal to the third number, determining the first parameter corresponding to the second-type neighbor cell as P41, wherein the P41 is a positive integer;
in a case where the sixth number is greater than the N1 and less than the third number, determining the first parameter corresponding to the second-type neighbor cell as the P42.

13. The measurement method according to claim 6, wherein determining the first parameter according to the TCI information, the fourth number and the third information comprises:
determining, according to the TCI information, that no neighbor cell of the terminal is present on the active TCI state list;
allocating one or more first processors for use by one or more second-type neighbor cells; and
determining, according to the third number and the fourth number, the first parameter corresponding to the second-type neighbor cell.

14. The measurement method according to claim 13, wherein determining, according to the third number and the fourth number, the first parameter corresponding to the second-type neighbor cell comprises any one of:
determining the first parameter corresponding to the second-type neighbor cell as P51, wherein the P51 is a value obtained by rounding up a quotient of the third number divided by the fourth number;
in a case where the fourth number is equal to N1, determining the first parameter as the third number;
in a case where the fourth number is greater than or equal to the N1, determining the first parameter as the P51;
in a case where the fourth number is greater than or equal to the N1, determining the first parameter as P52, wherein the P52 is a number of frequency layers expected to be measured by the terminal.

15. The measurement method according to claim 4, wherein determining the first parameter according to the first information comprises any one of:
determining the first parameter as P61, wherein the P61 is a value obtained by rounding up a quotient of the first number divided by the fourth number;
in a case where the first number is greater than the fourth number, and the fourth number is equal to N1, determining the first parameter as the first number;
in a case where the first number is greater than the fourth number, and the fourth number is greater than or equal to the N1, determining the first parameter as the P61;
in a case where the first number is greater than the fourth number, and the fourth number is greater than or equal to the N1, determining the first parameter as P62, wherein the P62 is a number of frequency layers expected to be measured by the terminal.

16. The measurement method according to any one of claims 1 to 15, wherein determining the first measurement period according to the first parameter comprises:
determining the first measurement period according to the first parameter and second information, wherein the second information comprises at least one of:
whether the terminal is configured with discontinuous reception (DRX);
a DRX cycle of the terminal;
a measurement report period of the terminal;
a period T_{SSB_NBC} of a synchronization signal block (SSB) index of the neighbor cell of the terminal;
a third parameter M, wherein the third parameter M is a parameter determined according to an upper layer configuration;
a fourth parameter P, wherein the fourth parameter P is a parameter determined according to a measurement gap (GAP) configured for the terminal and a slot occasion of an SSB; or
a fifth parameter K, wherein the fifth parameter K is a preset parameter.

17. The measurement method according to any one of claims 1 to 16, wherein the neighbor cell is a neighbor cell expected to be measured by the terminal, and one or more neighbor cells expected to be measured are a subset or a full set of one or more neighbor cells configured by a network device for the terminal.

18. The measurement method according to any one of claims 1 to 17, wherein the signal measurement is a measurement for a layer 1 (L1) or layer 2 (L2) triggered mobility (LTM).

19. A measurement method, comprising:
determining a first measurement period according to a first parameter, wherein the first measurement period is a period for a terminal to perform a measurement on a neighbor cell in a case where a first condition is satisfied, the first condition is configured to determine that the terminal is capable of performing a signal measurement on the neighbor cell and a serving cell respectively based on different fast Fourier transform (FFT) processors, and the first parameter is a measurement period scaling factor corresponding to the neighbor cell; and
determining, according to the first measurement period, an expected time for the terminal to perform the signal measurement.

20. The measurement method according to claim 19, wherein the first condition comprises at least one of:
that the terminal supports a first capability, wherein the first capability is a capability that the terminal supports that a receiving time difference (RTD) of a plurality of target cells is greater than a cyclic prefix (CP), and the plurality of target cells comprise the neighbor cell and/or the serving cell of the terminal;
that the terminal is provided with a first processor, wherein the first processor is an FFT processor capable of measuring the neighbor cell; or
that a time difference of signals received by the terminal from a plurality of target cells can be greater than the CP.

21. The measurement method according to claim 19 or 20, further comprising:
determining the first parameter according to first information, wherein the first information is information related to the neighbor cell of the terminal.

22. The measurement method according to claim 21, wherein the first information comprises at least one of:
transmission configuration indicator (TCI) information, wherein the TCI information is configured to determine whether any neighbor cell is present on an active TCI state list;
a first number, wherein the first number is a number of neighbor cells;
a second number, wherein the second number is a number of first-type neighbor cells, and a first-type neighbor cell is a neighbor cell present on the active TCI state list;
a third number, wherein the third number is a number of second-type neighbor cells, a second-type neighbor cell is a neighbor cell not present on the active TCI state list, and a sum of the third number and the second number is less than or equal to the first number;
a fourth number, wherein the fourth number is a number of first processors, and a first processor is an FFT processor capable of measuring the neighbor cell;
a fifth number, wherein the fifth number is a number of first processors allocated for use by the first-type neighbor cell; or
a sixth number, wherein the sixth number is a number of first processors allocated for use by the second-type neighbor cell, and a sum of the fifth number and the sixth number is less than or equal to the fourth number.

23. The measurement method according to claim 22, wherein determining the first parameter according to the first information comprises:
determining that the first number is less than or equal to the fourth number; and
determining the first parameter as P11, wherein the P11 is a preset positive integer.

24. The measurement method according to claim 22, wherein determining the first parameter according to the first information comprises:
determining that the first number is greater than the fourth number; and
determining the first parameter according to the TCI information, the fourth number and third information, wherein the third information comprises at least one of: the first number, the second number, the third number, the fifth number, or the sixth number.

25. The measurement method according to claim 24, wherein determining the first parameter according to the TCI information, the fourth number and the third information comprises:
determining, according to the TCI information, that one or more neighbor cells of the terminal are present on the active TCI state list;
allocating one or more first processors for use by one or more first-type neighbor cells; and
determining, according to the second number and the fourth number, the first parameter corresponding to the first-type neighbor cell.

26. The measurement method according to claim 25, wherein determining, according to the second number and the fourth number, the first parameter corresponding to the first-type neighbor cell comprises any one of:
determining the first parameter corresponding to the first-type neighbor cell as P21, wherein the P21 is a value obtained by rounding up a quotient of the second number divided by the fourth number;
in a case where the fourth number is equal to N1, determining the first parameter as the second number, wherein the N1 is a preset positive integer;
in a case where the fourth number is greater than or equal to the N1, and the second number is greater than or equal to the fourth number, determining the first parameter as the P21;
in a case where the second number is less than or equal to the fourth number, determining the first parameter as P22, wherein the P22 is a preset positive integer.

27. The measurement method according to claim 24, wherein determining the first parameter according to the TCI information, the fourth number and the third information comprises:
in a case where the fourth number is equal to N1, and it is determined according to the TCI information that one or more neighbor cells of the terminal are present on the active TCI state list, performing the signal measurement on one or more first-type neighbor cells and one or more second-type neighbor cells by using the fourth number of first processors;
determining the first parameter corresponding to the first-type neighbor cell as a product of the second number and a first value, wherein the first value is a positive integer greater than or equal to 2; and
determining the first parameter corresponding to the second-type neighbor cell as a product of the third number and the first value.

28. The measurement method according to claim 24, wherein determining the first parameter according to the TCI information, the fourth number and the third information comprises:
in a case where the fourth number is greater than N1, and it is determined according to the TCI information that one or more neighbor cells of the terminal are present on the active TCI state list, allocating the fifth number of first processors for use by one or more first-type neighbor cells, and allocating the sixth number of first processors for use by one or more second-type neighbor cells;
determining the first parameter corresponding to the first-type neighbor cell according to the second number and the fifth number, wherein the fifth number is less than or equal to the second number; and
determining the first parameter corresponding to the second-type neighbor cell according to the third number and the sixth number, wherein the sixth number is less than or equal to the third number.

29. The measurement method according to claim 28, wherein determining the first parameter corresponding to the first-type neighbor cell according to the second number and the fifth number comprises any one of:
determining the first parameter corresponding to the first-type neighbor cell as P32, wherein the P32 is a value obtained by rounding up a quotient of the second number divided by the fifth number;
in a case where the fifth number is equal to N1, determining the first parameter corresponding to the first-type neighbor cell as the second number;
in a case where the fifth number is equal to the second number, determining the first parameter corresponding to the first-type neighbor cell as P31, wherein the P31 is a positive integer;
in a case where the fifth number is greater than the N1 and less than the second number, determining the first parameter corresponding to the first-type neighbor cell as the P32.

30. The measurement method according to claim 28, wherein determining the first parameter corresponding to the second-type neighbor cell according to the third number and the sixth number comprises any one of:
determining the first parameter corresponding to the second-type neighbor cell as P42, wherein the P42 is a value obtained by rounding up a quotient of the third number divided by the sixth number;
in a case where the sixth number is equal to N1, determining the first parameter corresponding to the second-type neighbor cell as the third number;
in a case where the sixth number is equal to the third number, determining the first parameter corresponding to the second-type neighbor cell as P41, wherein the P41 is a positive integer;
in a case where the sixth number is greater than the N1 and less than the third number, determining the first parameter corresponding to the second-type neighbor cell as the P42.

31. The measurement method according to claim 24, wherein determining the first parameter according to the TCI information, the fourth number and the third information comprises:
determining, according to the TCI information, that no neighbor cell of the terminal is present on the active TCI state list;
allocating one or more first processors for use by one or more second-type neighbor cells; and
determining, according to the third number and the fourth number, the first parameter corresponding to the second-type neighbor cell.

32. The measurement method according to claim 31, wherein determining, according to the third number and the fourth number, the first parameter corresponding to the second-type neighbor cell comprises any one of:
determining the first parameter corresponding to the second-type neighbor cell as P51, wherein the P51 is a value obtained by rounding up a quotient of the third number divided by the fourth number;
in a case where the fourth number is equal to N1, determining the first parameter as the third number;
in a case where the fourth number is greater than or equal to the N1, determining the first parameter as the P51;
in a case where the fourth number is greater than or equal to the N1, determining the first parameter as P52, wherein the P52 is a number of frequency layers expected to be measured by the terminal.

33. The measurement method according to claim 22, wherein determining the first parameter according to the first information comprises any one of:
determining the first parameter as P61, wherein the P61 is a value obtained by rounding up a quotient of the first number divided by the fourth number;
in a case where the first number is greater than the fourth number, and the fourth number is equal to N1, determining the first parameter as the first number;
in a case where the first number is greater than the fourth number, and the fourth number is greater than or equal to the N1, determining the first parameter as the P61;
in a case where the first number is greater than the fourth number, and the fourth number is greater than or equal to the N1, determining the first parameter as P62, wherein the P62 is a number of frequency layers expected to be measured by the terminal.

34. The measurement method according to any one of claims 19 to 33, wherein determining the first measurement period according to the first parameter comprises:
determining the first measurement period according to the first parameter and second information, wherein the second information comprises at least one of:
whether the terminal is configured with discontinuous reception (DRX);
a DRX cycle of the terminal;
a measurement report period of the terminal;
a period T_{SSB_NBC} of a synchronization signal block (SSB) index of the neighbor cell of the terminal;
a third parameter M, wherein the third parameter M is a parameter determined according to an upper layer configuration;
a fourth parameter P, wherein the fourth parameter P is a parameter determined according to a measurement gap (GAP) configured for the terminal and a slot occasion of an SSB; or
a fifth parameter K, wherein the fifth parameter K is a preset parameter.

35. The measurement method according to any one of claims 19 to 34, wherein the neighbor cell is a neighbor cell expected to be measured by the terminal, and one or more neighbor cells expected to be measured are a subset or a full set of one or more neighbor cells configured by a network device for the terminal.

36. The measurement method according to any one of claims 19 to 35, wherein the signal measurement is a measurement for a layer 1 (L1) or layer 2 (L2) triggered mobility (LTM).

37. A terminal, comprising:
a processing module, configured to determine a first measurement period according to a first parameter, wherein the first measurement period is a period for a terminal to perform a measurement on a neighbor cell in a case where a first condition is satisfied, the first condition is configured to determine that the terminal is capable of performing a signal measurement on the neighbor cell and a serving cell respectively based on different fast Fourier transform (FFT) processors, and the first parameter is a measurement period scaling factor corresponding to the neighbor cell; and perform the signal measurement on the neighbor cell according to the first measurement period.

38. A network device, comprising:
a processing module, configured to determine a first measurement period according to a first parameter, wherein the first measurement period is a period for a terminal to perform a measurement on a neighbor cell in a case where a first condition is satisfied, the first condition is configured to determine that the terminal is capable of performing a signal measurement on the neighbor cell and a serving cell respectively based on different fast Fourier transform (FFT) processors, and the first parameter is a measurement period scaling factor corresponding to the neighbor cell; and determine, according to the first measurement period, an expected time for the terminal to perform the signal measurement.

39. A communication device, comprising:
one or more processors,
wherein the communication device is configured to execute the measurement method according to any one of claims 1 to 18 or claims 19 to 36.

40. A storage medium having instructions stored therein, wherein the instructions, when run on a communication device, cause the communication device to execute the measurement method according to any one of claims 1 to 18 or claims 19 to 36.

41. A communication system, comprising a terminal and a network device, wherein the terminal is configured to implement the measurement method according to any one of claims 1 to 18, and the network device is configured to implement the measurement method according to any one of claims 19 to 36.
